# EUROPEAN PATENT APPLICATION

(11) **EP 4 723 661 A1**
(43) Date of publication of application: **08.04.2026**
(21) Application number: 24832323.0
(22) Date of filing: 11.06.2024
(51) Int. Cl.: H04N 23/68, H04N 23/54, H04N 23/55, G03B 3/10, G03B 13/36, G03B 5/00, G03B 17/17, G03B 17/12

(54) **CAMERA MODULE AND ELECTRONIC DEVICE COMPRISING SAME**

(30) Priority: 26.06.2023 KR 20230081717; 28.07.2023 KR 20230099069
(71) Applicant: Samsung Electronics Co., Ltd., Suwon-si, Gyeonggi-do 16677 (KR)
(72) Inventor: KIM, Sewon, Suwon-si Gyeonggi-do 16677 (KR); SHIM, Jaekyu, Suwon-si Gyeonggi-do 16677 (KR); LEE, Kihuk, Suwon-si Gyeonggi-do 16677 (KR)
(74) Representative: HGF
(86) International application number: PCT/KR2024/007978
(87) International publication number: WO 2025/005543

(57) **Abstract**

A camera module according to an embodiment may include a lens assembly including at least one lens, an optical refractive member disposed to a path of light passing through at least a part of the at least one lens, an image sensor for converting the light received through the at least one lens and the optical refractive member into an electrical signal, a housing for accommodating the optical refractive member and the image sensor, a first driving unit for moving the image sensor within an internal space formed by the housing in a first direction in which a distance between the optical refractive member and the image sensor is changed, and a second driving unit for moving the image sensor in at least one of a second direction or a third direction which is different from the second direction based on the housing. The first driving unit may include a first carrier for transporting at least a part of the second driving unit which accommodates the image sensor in the first direction, and at least one first sphere interposed between the first carrier and the housing and disposed to move the first carrier in the first direction with respect to the housing. Besides, various embodiments obtained from the specification are possible.

## Description

### [Technical Field]

Embodiments disclosed in this document relate to a camera module and an electronic device including the same.

### [Background Art]

As digital camera manufacturing technology advances, an electronic device equipped with a small and lightweight camera module has become commercialized. As the camera module is installed in the electronic device (e.g., a mobile communication terminal) typically carried around all the time, a user may easily utilize various functions such as video call or augmented reality, as well as photo or video shooting.

Recently, an electronic device including a plurality of cameras is supplied. The small electronic device including the plurality of cameras may include a folded optics camera. The folded optics camera may refract a path of light, regardless of a direction of external incident light by arranging an optical member such as an optical refractive member (e.g., a prism).

For the camera module to capture an image, a focus of lens needs to be adjusted to form an accurate image on an image sensor included in the camera module. In addition, as the electronic device becomes smaller, image quality may be deteriorated by a movement of the user holding the electronic device while capturing the image.

An auto focus (AF) function is a function of an optical system for automatically adjusting the focus on a subject. The electronic device may move the lens or the image sensor to focus on a subject.

An optical image stabilization (OIS) technology may be adopted to improve the image quality of the captured image. The electronic device may detect a movement of the electronic device using a motion sensor included in the electronic device. The electronic device may obtain a stabilized image, by driving the lens or the image sensor to move in response to the movement of the electronic device.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

A camera module according to an embodiment may include a lens assembly including at least one lens, an optical refractive member disposed to a path of light passing through at least a part of the at least one lens, an image sensor for converting the light received through the at least one lens and the optical refractive member into an electrical signal, a housing for accommodating the optical refractive member and the image sensor, a first driving unit for moving the image sensor within an internal space formed by the housing in a first direction in which a distance between the optical refractive member and the image sensor is changed, and a second driving unit for moving the image sensor in at least one of a second direction or a third direction which is different from the second direction based on the housing. The first driving unit may include a first carrier for transporting at least a part of the second driving unit which accommodates the image sensor in the first direction, and at least one first sphere interposed between the first carrier and the housing and disposed to move the first carrier in the first direction with respect to the housing.

An electronic device according to an embodiment may include a camera module, and at least one processor for controlling an operation of the camera module. The camera module may include a lens assembly including at least one lens, an optical refractive member, an image sensor for converting light received through the at least one lens and the optical refractive member into an electrical signal, a housing for accommodating the optical refractive member and the image sensor, a first driving unit for moving the image sensor in a first direction in which a distance between the optical refractive member and the image sensor is changed, and a second driving unit for moving the image sensor in at least one of a second direction or a third direction different from the second direction with respect to the housing. The first driving unit may include a first carrier for moving the image sensor in the first direction, and at least one first sphere disposed between the first carrier and the housing and allowing movement of the first carrier.

### [Brief Description of Drawings]

FIG. 1 is a perspective view of a camera module according to an embodiment.
FIG. 2 is a sectional view of a camera module of FIG. 1.
FIG. 3 is a perspective view for illustrating a driving unit for auto focus (AF) driving of a camera module according to an embodiment.
FIG. 4 is a view for illustrating arrangement of a yoke included in a camera module according to an embodiment.
FIG. 5 is a view illustrating a driving unit assembled with an image sensor according to an embodiment.
FIG. 6 is a view for illustrating arrangement of an elastic member included in a camera module according to an embodiment.
FIG. 7 is a view for illustrating a driving unit for driving optical image stabilization (OIS) of a camera module according to an embodiment.
FIG. 8 is a view for illustrating an elastic member according to an embodiment.
FIG. 9 is a view for illustrating an elastic member according to an embodiment.
FIG. 10A is a view for illustrating a driving unit for OIS driving of a camera module according to an embodiment.
FIG. 10B is a view for illustrating a driving unit for OIS driving of a camera module according to an embodiment.
FIG. 11 is a view illustrating a driving unit of a camera module according to an embodiment.
FIG. 12 is a perspective view of a driving unit for OIS driving according to an embodiment.
FIG. 13 is a view illustrating an optical path according to an embodiment.
FIG. 14 is a cross-sectional view of a camera module according to an embodiment.
FIG. 15 is a view illustrating a carrier and an optical refractive member according to an embodiment.
FIG. 16 is a view illustrating an electronic device including a camera module according to an embodiment.
FIG. 17 is a block diagram of an electronic device in a network environment, according to various embodiments.
FIG. 18 is a block diagram illustrating a camera module, according to various embodiments.

In relation to descriptions of the drawings, like or similar reference numerals may be used for like or similar components.

### [Mode for the Invention]

Hereinafter, various embodiments of the disclosure are described referring to the accompanying drawings. However, this is not intended to limit the disclosure to specific embodiments, but should be understood to include various modifications, equivalents, and/or alternatives of the embodiments of the disclosure.

An electronic device according to various embodiments of this document may include at least one of, for example, a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device. According to various embodiments, the wearable device may include at least one of an accessory type (e.g., a watch, a ring, a bracelet, an anklet, a necklace, glasses, contact lenses, or a head-mounted-device (HMD)), a fabric or clothing-integrated type (e.g., an electronic garment), a body-attached type (e.g., a skin pad or a tattoo), or an implantable type (e.g., an implantable circuit).

In some embodiments, the electronic device may be a home appliance. The home appliance may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box, a game console, an electronic dictionary, an electronic key, a camcorder, or an electronic picture frame.

In an embodiment, the electronic device may include at least one of various medical devices (e.g., various portable medical measuring devices (a blood glucose meter, a heart rate monitor, a blood pressure monitor, or a body temperature monitor), magnetic resonance angiography (MRA), magnetic resonance imaging (MRI), computer tomography (CT), a camera, or an ultrasound device), a navigation device, a global navigation satellite system (GNSS), an event data recorder (EDR), a flight data recorder (FDR), an automobile infotainment device, electronic equipment for ships (e.g., a navigation device for a ship or a gyrocompass), avionics, a security device, a head unit for vehicles, an industrial or household robot, an automatic teller's machine (ATM) of an financial institution, a point of sales (POS) of a store, or an internet of things device (e.g., a light bulb, various sensors, an electric or gas meter, a sprinkler device, a fire alarm, a thermostat, a streetlight, a toaster, an exercise machine, a hot water tank, a heater, or a boiler).

According to some embodiment, the electronic device may include at least one of a part of furniture or a building/structure, an electronic board, an electronic signature receiving device, a projector, or various measuring devices (e.g., a water, electricity, gas, or radio wave measuring device). In various embodiments, the electronic device may be a combination of one or more of the various devices described above. The electronic device according to some embodiment may be a flexible electronic device. In addition, the electronic device according to the embodiment of this document is not limited to the devices described above, and may include a new electronic device according to technological advancement.

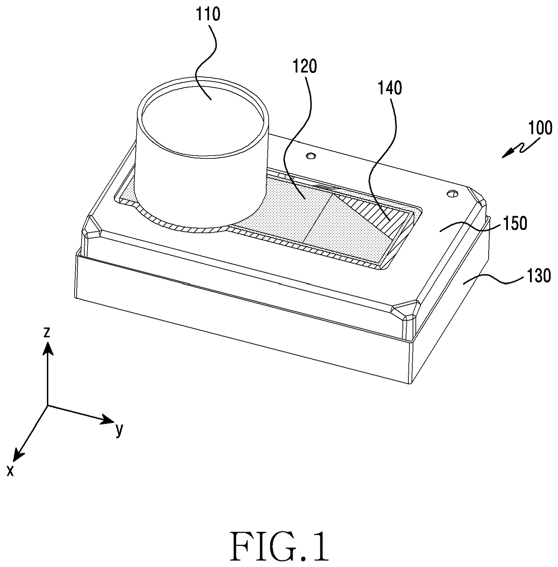

FIG. 1 is a perspective view of a camera module 100 according to an embodiment.

The camera module 100 according to an embodiment may include a lens assembly 110, an optical refractive member 120, an image sensor (not shown), a housing 130, a first driving unit (not shown) for auto focus (AF) driving of the camera module 100, and a second driving unit (not shown) for optic image stabilization (OIS) driving of the camera module 100. However, the components of the camera module 100 are not limited thereto. For example, the camera module 100 may omit at least one of the components described above, or may further include at least one component. For example, the camera module 100 may further include a carrier 140 for accommodating the optical refractive member 120, and a cover 150 for covering at least a part of the housing 130.

According to an embodiment, the housing 130 and/or the cover 150 may form an exterior of the camera module 100. For example, the housing 130 may provide a frame for supporting other components. Shapes of the housing 130 and/or the cover 150 may be changed depending on the shape of the camera module 100 or the component included in the camera module 100. For example, the housing 130 and/or the cover 150 may be a box-shaped housing.

According to an embodiment, the cover 150 may cover at least a part of the housing 130. For example, the cover 150 may cover at least a part of a side surface of the housing 130 and an upper portion of the housing 130. However, it is not limited thereto. For example, the housing 130 may be a single member with the cover 150. The cover 150 may form a space with the housing 130. At least one of the optical refractive member 120, the carrier 140 on which the optical refractive member 120 is disposed, the image sensor, the first driving unit for the AF driving of the camera module 100 or the second driving unit for the OIS driving of the camera module 100 may be disposed in the space formed between the housing 130 and the cover 150.

According to an embodiment, the lens assembly 110 including at least one lens may be disposed on the optical refractive member 120. For example, the lens assembly 110 may be disposed on an upper surface of the optical refractive member 120 facing in a first direction (e.g., the z-axis direction or the -z-axis direction).

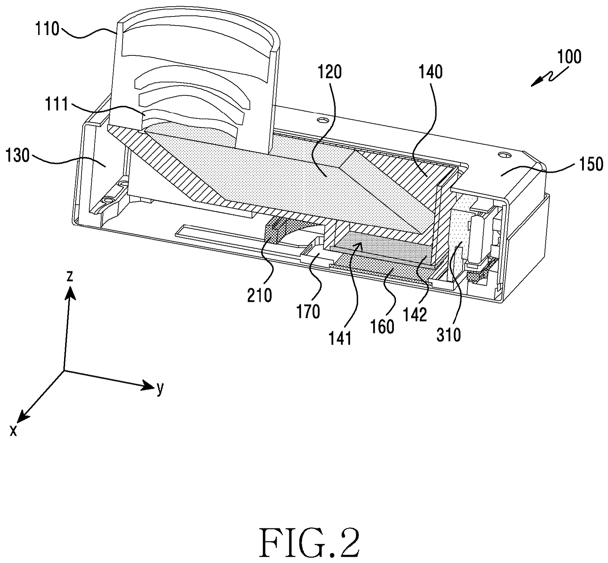

FIG. 2 is a sectional view of the camera module of FIG. 1.

The camera module 100 of FIG. 2 may be referred to by the camera module 100 of FIG. 1. The same terms and/or the same reference numerals are used for components identical or substantially identical to those described above.

Referring to FIG. 2, the camera module 100 according to an embodiment may include the lens assembly 110, the optical refractive member 120, an image sensor 160, the housing 130, the first driving unit (e.g., a first carrier 210) for the AF driving of the camera module 100 and the second driving unit (e.g., a second carrier 310) for the OIS driving of the camera module 100. However, the components of the camera module 100 are not limited thereto. For example, the camera module 100 may omit at least one of the components described above, or may further include at least one component. For example, referring to FIG. 2, the camera module 100 may further include the carrier 140 for accommodating the optical refractive member 120, and the cover 150 for covering at least a part of the housing 130.

According to an embodiment, the lens assembly 110 may include at least one lens 111 disposed to form an image of a subject on the image sensor 160. The camera module 100 may receive light through the lens assembly 110. For example, the light may enter the camera module 100 through at least a part of the at least one lens 111. In one example, the light may enter the camera module 100 in the first direction (e.g., the -z-axis direction).

According to an embodiment, at least a part of the lens assembly 110 may be exposed to outside of the camera module 100. For example, at least a part of the lens assembly 110 may be disposed to protrude from an upper surface (e.g., a surface facing in the +z direction) of the housing 130 or the cover 150.

According to an embodiment, the optical refractive member 120 may change a path of the light entering the camera module 100 through the lens assembly 110. For example, the optical refractive member 120 may be disposed to refract the path of the light passing through at least a part of the at least one lens 111. The light entering the camera module 100 may be refracted by the optical refractive member 120 at least one or more times.

According to an embodiment, the optical refractive member 120 may include at least one of a prism or a reflective member.

According to an embodiment, the optical refractive member 120 may be disposed to refract the path of the light such that the light passing through the optical refractive member 120 is incident on the image sensor 160. The light refracted through the optical refractive member 120 may be introduced into the image sensor 160. For example, in one example, the light refracted through the optical refractive member 120 may be introduced into the image sensor 160 in the first direction (e.g., the -z-axis direction).

According to an embodiment, at least one of the lens assembly 110 or the optical refractive member 120 may be fixed to the housing 130. For example, the optical refractive member 120 may be secured to the carrier 140 fixed to the housing 130. For example, the optical refractive member 120 may be secured to the housing 130 using a bracket. Since the optical refractive member 120 is secured to the housing 130, the optical refractive member 120 may not drive. Since the optical refractive member 120 does not drive, image distortion due to the driving of the optical refractive member 120 may be prevented.

According to an embodiment, the image sensor 160 may be disposed below the optical refractive member 120 (e.g., below in the -z direction). For example, the image sensor 160 may be disposed below the carrier 140 which accommodates the optical refractive member 120.

According to an embodiment, the image sensor 160 may move in an internal space (or, a space between the housing 130 and the cover 150) formed by the housing 130 based on the housing 130. For example, the image sensor 160 may be moved in the first direction (e.g., the z-axis direction or the -z-axis direction) based on the housing 130 by the first driving unit (e.g., the first carrier 210) for the AF driving of the camera module 100. For example, the image sensor 160 may be moved in at least one of a second direction (e.g., the x-axis direction or the -x-axis direction) or a third direction (e.g., the y-axis direction or the -y-axis direction) based on the housing 130 by the second driving unit (e.g., the second carrier 310) for the OIS driving of the camera module 100. However, it is not limited thereto. For example, the image sensor 160 may be rolled or tilted based on an optical axis direction (e.g., the z-axis direction or the - z-axis direction) by the second driving unit (e.g., the second carrier 310) for the OIS driving of the camera module 100. According to an embodiment, the image sensor 160 may be accommodated in the second driving unit.

According to an embodiment, the camera module 100 may include a printed circuit board 170 accommodated inside the housing 130. The printed circuit board 170 may include a flexible circuit board. In one example, the printed circuit board 170 may overlap at least a part of the optical refractive member 120. For example, when the camera module 100 is viewed from above (e.g., when viewed in the -z-axis direction), at least a part of the printed circuit board 170 may overlap at least a part of the optical refractive member 120. In one example, the printed circuit board 170 may be disposed to surround at least a part of the optical refractive member 120. For example, the printed circuit board 170 may be disposed to surround at least one of a side surface (e.g., a surface facing in the second direction or the third direction), a rear surface (e.g., a surface facing in the -z-axis direction) or an inclined surface of the optical refractive member 120.

According to an embodiment, the image sensor 160 may be disposed on the printed circuit board 170. For example, the image sensor 160 may be fixed to the printed circuit board 170. Since the image sensor 160 is disposed on the printed circuit board 170, the image sensor 160 may move in the internal space formed by the housing 130 based on the housing 130 together with the printed circuit board 170.

According to an embodiment, the optical refractive member 120 may be disposed to be spaced apart from the image sensor 160 by a specific distance. For example, the optical refractive member 120 may be disposed to be spaced apart from the image sensor 160 in the first direction (e.g., the z-axis direction or the -z-axis direction). For example, the optical refractive member 120 may be spaced apart from the optical refractive member 120 by a first interface, if the image sensor 160 moves from a reference position in the z-axis direction. If the image sensor 160 moves from the reference position in the -z-axis direction, the optical refractive member 120 may be spaced apart from the optical refractive member 120 by a second interval greater than the first interval.

According to an embodiment, if the camera module is a 5x module, a shooting distance is about 50 cm ~ 1 m, and a subject is 80 cm, an AF stroke value of the first driving unit for the AF driving may be about 0.6 mm. However, it is not limited thereto.

According to an embodiment, the first carrier 140 may transport the image sensor 160 in the first direction (e.g., the z-axis direction or the -z-axis direction) by a first distance based on at least one opening 141. If the image sensor 160 is transported by the first carrier 140 by the first distance in the first direction, it may be disposed to be spaced apart from the at least one opening 141 by a specific distance. For example, if the image sensor 160 and the at least one opening 141 are spaced apart by a second distance, the second distance may be greater than the first distance. For example, if the second distance by which the image sensor 160 and the at least one opening 141 are spaced apart has a minimum value, the second distance may be greater than the first distance. For example, the second distance may be a sum of the specific distance and the first distance. However, it is not limited thereto.

In one example, the second distance may be about 0.4 mm or more. However, it is not limited thereto.

According to an embodiment, the carrier 140 for accommodating the optical refractive member 120 may include the at least one opening 141 disposed between the optical refractive member 120 and the image sensor 160. The at least one opening 141 may be opened in a direction toward the image sensor 160 (e.g., in the -z-axis direction).

According to an embodiment, the optical refractive member 120 may be disposed to refract the path of the light traveling such that the light passing through the optical refractive member 120 enters the image sensor 160 through the at least one opening 141. The light refracted through the optical refractive member 120 may pass through the at least one opening 141 and enter the image sensor 160.

According to an embodiment, the at least one opening 141 may be disposed to be spaced apart from the optical refractive member 120 by a specific distance. For example, the at least one opening 141 may be spaced apart from the optical refractive member 120 in the first direction (e.g., the z-axis direction). The carrier 140 may include a recess disposed to separate the at least one opening 141 from the optical refractive member 120 by a specific distance. For example, a space may be formed between the optical refractive member 120 and the at least one opening 141.

According to an embodiment, the at least one opening 141 may be disposed to be spaced apart from the image sensor 160 by a specific distance. For example, the at least one opening 141 may be spaced apart from the image sensor 160 in the first direction (e.g., the -z-axis direction).

According to an embodiment, the camera module 100 may include at least one filter 142 disposed between the optical refractive member 120 and the image sensor 160. For example, the at least one filter 142 may be disposed in the at least one opening 141. However, it is not limited thereto. For example, the at least one filter 142 may be disposed in the image sensor 160. For example, the at least one filter 142 may move together with the image sensor 160. The at least one filter 142 may be disposed to be spaced apart from the optical refractive member 120. The at least one filter 142 may be disposed to be spaced apart from the image sensor 160. In one example, the at least one filter 142 may include, but not limited to, an infrared filter.

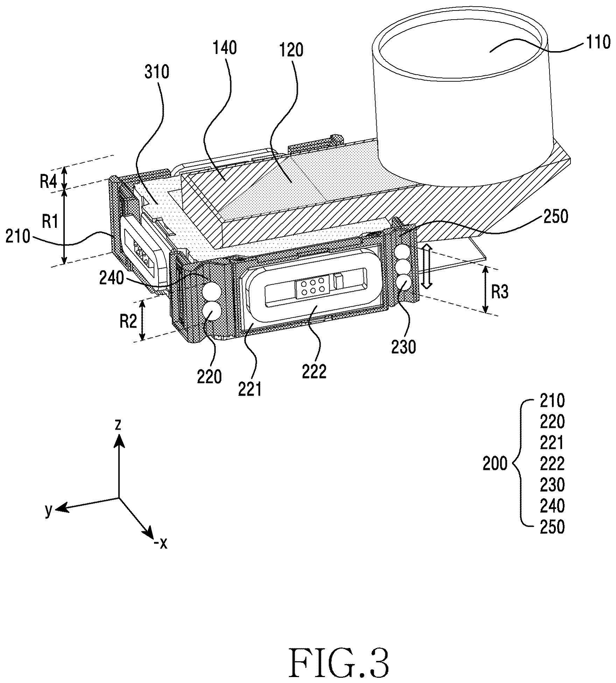

FIG. 3 is a perspective view for illustrating a driving unit for AF driving of a camera module according to an embodiment.

The camera module of FIG. 3 may be referred to by the camera module 100 of FIG. 1 and FIG. 2. The same terms and/or the same reference numerals are used for components identical or substantially identical to those described above, and redundant descriptions shall be omitted.

According to an embodiment, the camera module may include a first driving unit 200 for the AF function. The first driving unit 200 may move the image sensor (e.g., the image sensor 160 of FIG. 2) in the first direction (e.g., the z-axis direction or the -z-axis direction). The first driving unit 200 according to an embodiment may include an AF actuator configured to move the image sensor for the AF function. For example, the first driving unit 200 may move the image sensor in the first direction (e.g., the z-axis direction or the -z-axis direction) in which the distance between the optical refractive member and the image sensor is changed for the AF function.

According to an embodiment, the first driving unit 200 may include a first carrier 210 and at least one first sphere 220. However, the components of the first driving unit 200 are not limited thereto. For example, the first driving unit 200 may omit at least one of the components described above, or may further include at least one other component. For example, the first driving unit 200 may further include at least one of a first magnet 221, a first coil 222, at least one second sphere 230, at least one first guide portion 240 or at least one second guide portion 250.

According to an embodiment, the first carrier 210 may transport at least a part of the second driving unit accommodating the image sensor (e.g., the image sensor 160 of FIG. 2) in the first direction (e.g., the z-axis direction or the -z-axis direction). For example, the first carrier 210 may transport the second carrier 310 accommodating the image sensor in the first direction. In one example, the first carrier 210 may surround at least a part of the second carrier 310. For example, the first carrier 210 may surround at least a part of a side surface of the second carrier 310.

According to an embodiment, the at least one first sphere 220 may be disposed between the first carrier 210 and the housing (e.g., the housing 130 of FIG. 2). The at least one first sphere 220 may be disposed to allow the first carrier 210 to move in the first direction with respect to the housing. For example, the at least one first sphere 220 may be disposed side by side along the first direction.

According to an embodiment, the first driving unit 200 may further include the at least one second sphere 230. The at least one second sphere 230 may be disposed between the first carrier 210 and the housing. The at least one second sphere 230 may be disposed to allow the first carrier 210 to move in the first direction relative to the housing. For example, the at least one second sphere 230 may be disposed side by side along the first direction. In one example, the at least one second sphere 230 may be disposed in parallel with the at least one first sphere 220.

According to an embodiment, the at least one second sphere 230 may be disposed to be spaced apart from the at least one first sphere 220 by a specific distance. For example, the at least one first sphere 220 may be disposed at one edge of the first carrier 210, and the at least one second sphere 230 may be disposed at the other edge of the first carrier 210. For example, the at least one first sphere 220 may be disposed adjacent to one end of a first side (e.g., a side facing in the -x-axis direction) of the first carrier 210, and the at least one second sphere 230 may be disposed adjacent to the other end of the first side of the first carrier 210.

According to an embodiment, a size of the at least one first sphere 220 may have a first size. A size of the at least one second sphere 230 may have a second size. The second size may be substantially equal to as or smaller than the first size. However, it is not limited thereto. For example, the second size may be greater than the first size.

According to an embodiment, the number of the first spheres 220 disposed between the first carrier 210 and the housing may be equal to or different from the number of the second spheres 230.

According to an embodiment, the first magnet 221 may be disposed on the first side (e.g., a side facing in the -x-axis direction) of the first carrier 210. The first magnet 221 may be disposed to face the first coil 222. The first coil 222 may be disposed in the housing (e.g., the housing 130 of FIG. 2) facing the first side of the first carrier 210 on which the first magnet 221 is disposed. The first carrier 210 may be moved based on the housing (e.g., the housing 130 of FIG. 2) (or, the lens assembly 110, the optical refractive member 120 or the carrier 140) by a force in the first direction (e.g., the z-axis direction or the -z-axis direction) applied to the first magnet 221 by a magnetic field generated by a current flowing in the first coil 222. Since the first carrier 210 moves, the image sensor may be moved in the first direction. As the first carrier 210 moves, the distance from the optical refractive member 120 to the image sensor may be changed.

According to an embodiment, the first carrier 210 may include the first guide portion 240 on the first side (e.g., a side facing in the -x-axis direction). The first guide portion 240 may be formed in the first direction to allow the first carrier 210 to move in the first direction (the z-axis direction or the -z-axis direction). In one example, the first guide portion may have a guide groove or rail shape, but is not limited thereto.

According to an embodiment, the at least one first sphere 220 may be disposed on the first guide portion 240. The first guide portion 240 may guide the at least one first sphere 220 to move in the first direction. For example, the at least one first sphere 220 may move, roll, rotate, or tilt on the first guide portion 240.

According to an embodiment, since the at least one first sphere 220 is guided along the first guide portion 240, the first carrier 210 may be transported in the first direction. If the first carrier 210 is transported in the first direction, at least a part (e.g., the second carrier 310) of the second driving unit disposed on the first carrier 210 may be carried in the first direction. The movement of at least a part of the second driving unit may carry the image sensor (e.g., the image sensor 160 of FIG. 2) in the first direction. Although not depicted in FIG. 3, the housing (e.g., the housing 130 of FIG. 2) may include a guide portion formed at a position corresponding to the first guide portion 240 of the first carrier 210.

According to an embodiment, the first carrier 210 may further include the second guide portion 250 on the first side (e.g., a side facing in the -x-axis direction). The second guide portion 250 may be formed in the first direction to allow the first carrier 210 to move in the first direction (the z-axis direction or the -z-axis direction). In one example, the second guide portion may have a guide groove or rail shape, but is not limited thereto.

According to an embodiment, at least one second sphere 230 may be disposed on the second guide portion 250. The second guide portion 250 may guide the at least one second sphere 230 to move in the first direction. For example, the at least one second sphere 230 may move, roll, rotate, or tilt on the second guide portion 250.

According to an embodiment, since the at least one second sphere 230 is guided along the second guide portion 250, the first carrier 210 may be transported in the first direction. If the first carrier 210 is transported in the first direction, at least a part (e.g., the second carrier 310) of the second driving unit disposed on the first carrier 210 may be transported in the first direction. The movement of at least a part of the second driving unit may move the image sensor (e.g., the image sensor 160 of FIG. 2) in the first direction. Although not depicted in FIG. 3, the housing (e.g., the housing 130 of FIG. 2) may further include a guide portion formed at a position corresponding to the second guide portion 250 of the first carrier 210.

According to an embodiment, the at least one second guide portion 250 may be disposed to be spaced apart from the at least one first guide portion 240 by a specific distance. For example, the at least one first guide portion 240 may be disposed (or formed) at one edge of the first carrier 210, and the at least one second guide portion 250 may be disposed (or formed) at the other edge of the first carrier 210. For example, the at least one first guide portion 240 may be disposed (or formed) adjacent to one end of the first side (e.g., a side facing in the -x-axis direction) of the first carrier 210, and the at least one second guide portion 250 may be disposed (or formed) adjacent to the other end of the first side of the first carrier 210. According to an embodiment, the first magnet 221 may be disposed between the at least one first guide portion 240 and the at least one second guide portion 250.

According to an embodiment, the number of contact points of the at least one second guide portion 250 contacting the at least one second sphere 230 may be substantially equal to or greater than the number of contact points of the at least one first guide portion 240 contacting the at least one first sphere 220. For example, the first guide portion 240 may include a 'U' shaped groove, and the second guide portion 250 may include a 'V' shaped groove. At least one guide portion of the housing which faces the first guide portion 240 and contacts the at least one first sphere 220 may include a 'V' shaped groove, and at least one other guide portion of the housing which faces the second guide portion 250 and contacts the at least one second sphere 230 may include a 'V' shaped groove. However, it is not limited thereto. For example, the first guide portion 240 may include a 'V' shaped groove, and the second guide portion 250 may include a 'V' shaped groove. At least one guide portion of the housing which faces the first guide portion 240 and contact the at least one first sphere 220 may include a 'U' shape, and at least one guide portion of the housing which faces the second guide portion 250 and contacts the at least one second sphere 230 may include a 'V' shaped groove.

According to an embodiment, the first carrier 210 may have a first length R1 in the first direction (e.g., the z-axis direction or the -z-axis direction). A sum of lengths of the at least one first sphere 220 in the first direction may have a second length R2. For example, referring to FIG. 3, if the first driving unit 200 includes two first spheres 220, the sum of the lengths of the two first spheres 220 in the first direction may have the second length R2. A sum of lengths of the at least one second sphere 230 in the first direction may have a third length R3. For example, referring to FIG. 3, if the first driving unit 200 includes three second spheres 230, the sum of the lengths of the three second spheres 230 in the first direction may have the third length R3. The first carrier 210 may move in the first direction by a fourth length R4.

According to an embodiment, a sum of the greater length of the second length R2 and the third length R3 and the fourth length R4 may be smaller than the first length R1. For example, referring to FIG. 3, if the third length R3 is greater than the second length R2, the sum of the third length R3 and the fourth length R4 may be smaller than the first length R1. In one example, if the first driving unit 200 includes the at least one first sphere 220 alone, a sum of the sum of the length of the at least one first sphere 220 in the first direction R2 and the fourth length R4 may be smaller than the first length R1.

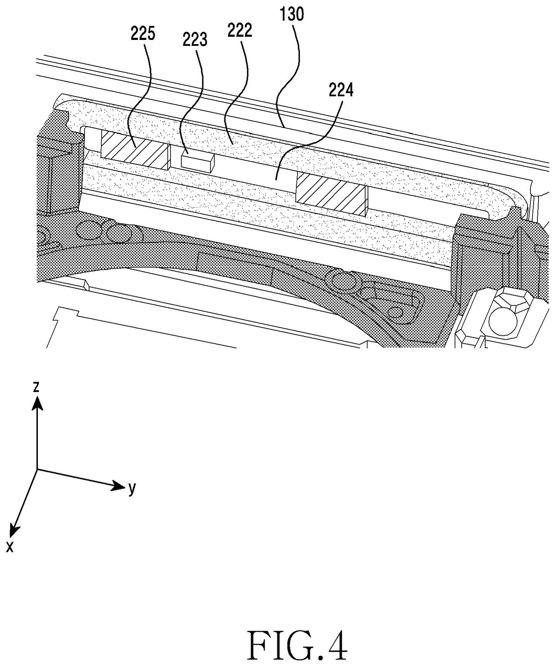

FIG. 4 is a view for illustrating arrangement of a yoke included in a camera module according to an embodiment.

The camera module of FIG. 4 may be referred to by the camera module of FIG. 1 through FIG. 3. The same terms and/or the same reference numerals are used for components identical or substantially identical to those described above, and redundant descriptions thereof shall be omitted.

Referring to FIG. 3 and FIG. 4, the camera module according to an embodiment may include a first yoke 224 disposed to face the first magnet (e.g., the first magnet 221 of FIG. 3). For example, the first magnet 221 may face a first coil 222 and the first yoke 224. In one example, the first yoke 224 may be disposed in the housing (e.g., the housing 130 of FIG. 2) facing the first side of the first carrier 210 on which the first magnet 221 is disposed. In one example, the first yoke 224 may be also disposed in the first coil 222.

According to an embodiment, a magnetic force may be formed between the first yoke 224 and the first magnet 221. For example, magnetic attraction may be formed between the first yoke 224 and the first magnet 221. Due to the magnetic attraction formed between the first yoke 224 and the first magnet 221, the first carrier 210 may not be separated from the housing. Due to the magnetic attraction formed between the first yoke 224 and the first magnet 221, at least one first sphere (e.g., the at least one first sphere 220 of FIG. 3) may not be separated from at least one first guide portion (e.g., the at least one first guide portion 240 of FIG. 3). Due to the magnetic attraction formed between the first yoke 224 and the first magnet 221, at least one second sphere (e.g., the at least one second sphere 230 of FIG. 3) may not be separated from at least one second guide portion (e.g., the second guide portion 250 of FIG. 3).

According to an embodiment, the camera module may include a second yoke 225 disposed to face the first magnet (e.g., the first magnet 221 of FIG. 3). The second yoke 225 may be disposed between the first yoke 224 and at least one first sphere (e.g., the at least one first sphere 220 of FIG. 3). In one example, the second yoke 225 may be disposed in the housing 130 facing the first side of the first carrier 210 on which the first magnet 221 is disposed. In one example, the second yoke 225 may be also disposed in the first coil 222.

According to an embodiment, at least one of the first yoke 224 or the second yoke 225 may reduce rattling (tilting) occurring if the first carrier (the first carrier 310 of FIG. 3) moves in the first direction.

According to an embodiment, the second yoke 225 may be disposed at a position biased toward at least one second sphere (the second sphere 230 of FIG. 3) relative to at least one first sphere (the first sphere 220 of FIG. 3). For example, the second yoke 225 may be disposed closer to the at least one second sphere 230 than the at least one first sphere 220. For example, the second yoke 225 may be disposed closer to at least one second guide portion (the second guide portion 250 of FIG. 3) than at least one first guide portion (the at least one first guide portion 240 of FIG. 3). For example, the distance from the second yoke 225 to the at least one first guide portion 240 may be substantially equal to or greater than the distance from the second yoke 225 to the at least one second guide portion 250.

According to an embodiment, at least one of the first yoke 224 or the second yoke 225 may be configured to generate a magnetic force (e.g., magnetic attraction) biased with respect to the first magnet (e.g., the first magnet 221 of FIG. 3), to allow the first carrier (e.g., the first carrier 310 of FIG. 3) to stably move. For example, at least one of the first yoke 224 or the second yoke 225 may form a stronger magnetic force in a region adjacent to at least one second guide portion (the second guide portion 250 of FIG. 3) than in a region adjacent to at least one first guide portion (the first guide portion 240 of FIG. 3). Hence, the first carrier (e.g., the first carrier 210 of FIG. 3) may be moved in close contact with at least one second sphere (the at least one second sphere 230 of FIG. 3) by the biased magnetic force formed between the first yoke 224 and the second yoke 225 and the first magnet (e.g., the first magnet 221 of FIG. 3).

According to an embodiment, at least one of the first yoke 224 or the second yoke 225 may be disposed on one side (e.g., one side in the -y-axis direction) of a winding center of the first coil (e.g., the first coil 222 of FIG. 3). Since at least one of the first yoke 224 or the second yoke 225 is concentrated on one side of the winding center of the first coil 222, the magnitude of the biased magnetic force generated between the first magnet (e.g., the first magnet 221 of FIG. 3) and at least one of the first yoke 224 or the second yoke 225 may increase.

According to an embodiment, at least one of the first yoke 224 or the second yoke 225 may be formed in the first direction (e.g., the z-axis direction or the -z-axis direction) as the longitudinal direction. Hence, even if the first carrier (e.g., the first carrier 210 of FIG. 3) moves in the first direction, the biased magnetic force may be generated between the first magnet (e.g., the first magnet 221 of FIG. 3) and at least one of the first yoke 224 or the second yoke 225.

According to an embodiment, at least one of the first yoke 224 or the second yoke 225 may have asymmetric left and right areas. For example, at least one of the first yoke 224 or the second yoke 225 may have an asymmetrical area in the y-axis direction. For example, at least one of the first yoke 224 or the second yoke 225 may include a first portion which is closer to at least one second sphere (the first sphere 230 of FIG. 3) than at least one first sphere (the first sphere 220 of FIG. 3), and a second portion which is closer to the at least one first sphere 220 than the at least one second sphere 230. The area of the first portion of at least one of the first yoke 224 or the second yoke 225 may be substantially equal to or greater than the area of the second portion. Thus, the first portion may have a stronger attractive force with the first magnet (e.g., the first magnet 221 of FIG. 3) than the second portion.

According to an embodiment, the mass of the first portion of at least one of the first yoke 224 or the second yoke 225 may be substantially equal to or greater than the mass of the second portion. For example, the thickness of the first portion may be substantially equal to or greater than the thickness of the second portion. Hence, the first portion may have the stronger attractive force with the first magnet (e.g., the first magnet 221 of FIG. 3) than the second portion.

According to an embodiment, the first carrier (e.g., the first carrier 210 of FIG. 3) may selectively contact at least one sphere due to the biased attraction between the first magnet (e.g., the first magnet 221 of FIG. 3) and at least one of the first yoke 224 or the second yoke 225. For example, the first carrier 210 may always contact the at least one second sphere (e.g., the at least one second sphere 230 of FIG. 3), but may selectively contact the at least one first sphere (the at least one first sphere 220 of FIG. 3).

According to an embodiment, at least one of the first yoke 224 or the second yoke 225 may include a material which is magnetic in the magnetic field. For example, at least one of the first yoke 224 or the second yoke 225 may include a material which forms an attractive force with the first magnet (e.g., the first magnet 221 of FIG. 3).

According to an embodiment, the shape of the first yoke 224 or the second yoke 225 is not limited to the shape illustrated in FIG. 4. For example, at least one of the first yoke 224 or the second yoke 225 may have a rectangular shape, as shown in FIG. 4, but is not limited thereto. For example, the second yoke 225 may include a protrusion protruding from the first yoke 224 in one direction.

According to an embodiment, FIG. 4 illustrates that the second yoke 225 is spaced apart from the first yoke 224 by the specific distance, but is not limited thereto. For example, the second yoke 225 may contact at least in part the first yoke 224. For example, the second yoke 225 may be a single member with the first yoke 224.

According to an embodiment, the camera module, which includes the second yoke 225, may overcome an external force which interferes with the AF operation. For example, if the printed circuit board (e.g., the printed circuit board 170 of FIG. 2) moves together with the image sensor (e.g., the image sensor 160 of FIG. 2), the printed circuit board 170 connected to the image sensor 160 may be distorted. As the printed circuit board 170 is distorted, an external force may be applied to the first carrier (e.g., the first carrier 210 of FIG. 3) to distort the first carrier 210. The second yoke 225 may generate a magnetic force for overcoming the external force, not to distort the first carrier 210.

According to an embodiment, the camera module may include a position sensor 223. The position sensor 223 may detect a position of at least one magnet (e.g., the first magnet 221 of FIG. 3). For example, the position sensor 223 may detect a magnetic field, to thus detect the position of at least one magnet with respect to at least one coil (e.g., the first coil 222 or the housing 130). A control circuit electrically connected to the position sensor 223 may supply power to the position sensor 223. The control circuit may detect the position of at least one magnet through the position sensor 223.

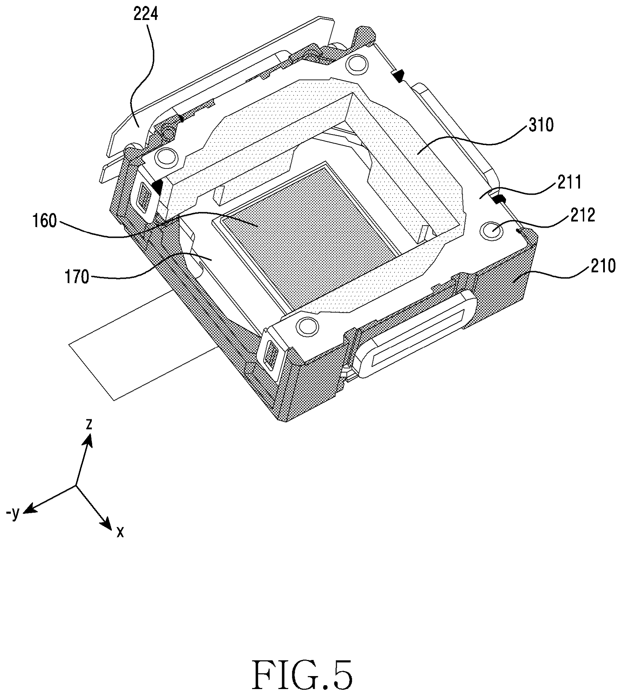

FIG. 5 is a view illustrating a driving unit assembled with an image sensor according to an embodiment.

Components of FIG. 5 may be referred to by the components of FIG. 1 through FIG. 4 mentioned above. The same terms and/or the same reference numerals are used for components identical or substantially identical to those described above, and redundant descriptions thereof shall be omitted. For example, the first yoke 224 of FIG. 5 may be referred to by the first yoke 224 of FIG. 4.

Referring to FIG. 5, at least a part of the second driving unit may be accommodated in the first driving unit. For example, at least a part of the second carrier 310 may be accommodated in the first carrier 210. For example, the first carrier 210 may surround at least a part of the side surface of the second carrier 310.

According to an embodiment, the image sensor 160 may be disposed on the printed circuit board 170. For example, the image sensor 160 may be secured to the printed circuit board 170.

According to an embodiment, the image sensor 160 and the printed circuit board 170 may move together with the first carrier 210. For example, since the printed circuit board 170 on which the image sensor 160 is disposed is coupled with the second carrier 310, the image sensor 160 and the printed circuit board 170 may move together with the second carrier 310. For example, if the second carrier 310 moves in the second direction (e.g., the x-axis direction or the -x-axis direction), the image sensor 160 and the printed circuit board 170 may move in the second direction. For example, if the second carrier 310 moves in a third direction (e.g., the y-axis direction or the -y-axis direction), the image sensor 160 and the printed circuit board 170 may move in the third direction. For example, since the second carrier 310 is accommodated in the first carrier 210, if the first carrier 210 moves in the first direction (e.g., the z-axis direction or the -z-axis direction), the second carrier 310 may move in the first direction, and the image sensor 160 and the printed circuit board 170 may move in the first direction.

According to an embodiment, at least one of the first carrier 210 or the second carrier 310 may be opened in the first direction. For example, at least one of the first carrier 210 or the second carrier 310 may be opened in the first direction in a portion corresponding to the image sensor 160. For example, at least one of the first carrier 210 or the second carrier 310 may have a space formed in the portion corresponding to the image sensor 160. For example, when at least one of the first carrier 210 or the second carrier 310 is viewed from above (e.g., when looking down in the -z-axis direction), the image sensor 160 may be visible.

According to an embodiment, the optical refractive member (e.g., the optical refractive member 120 of FIG. 3) may be disposed in the space (the opened portion) of at least one of the first carrier 210 or the second carrier 310. For example, referring to FIG. 2 and FIG. 5, at least a part of the carrier (e.g., the carrier 140 of FIG. 2) accommodating the optical refractive member may be disposed in the space. For example, the opening (e.g., the opening 141 of FIG. 2) may be disposed in the space. The image sensor 160 may correspond at least in part to the opening 141.

According to an embodiment, the first carrier 210 may include a cover portion 211 for covering at least a part of the first carrier 210. For example, the cover portion 211 may cover a surface of the first carrier 210 facing in the first direction (e.g., the +z-axis direction).

According to an embodiment, the camera module 100 may include at least one elastic member 212 disposed between the first carrier 210 and the cover (e.g., the cover 150 of FIG. 2). For example, the at least one elastic member 212 may be disposed on a surface of the first carrier 210 facing the cover 150. For example, the at least one elastic member 212 may be disposed on the cover portion 211. However, it is not limited thereto. For example, the at least one elastic member may be disposed on an inner surface of the cover 150 facing the upper surface (e.g., a surface facing in the +z-axis direction) of the first carrier 210.

According to an embodiment, the at least one elastic member 212 may reduce or eliminate noise generated by collision of the first carrier 210 and another component (e.g., the cover 150 of FIG. 2). The at least one elastic member 212 may reduce or eliminate damage to the first carrier 210 and/or another component caused by the first carrier 210 colliding with another component (e.g., the cover 150).

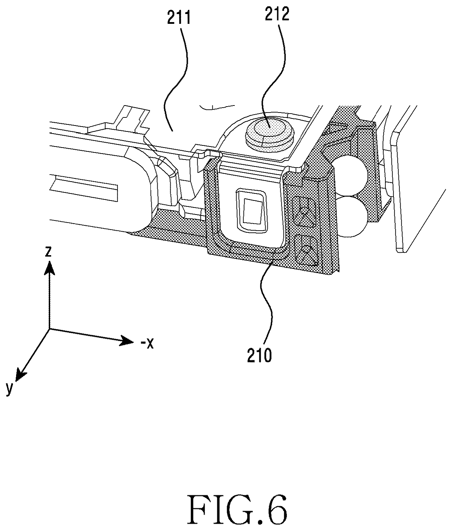

FIG. 6 is a view for illustrating arrangement of an elastic member 212 included in a camera module according to an embodiment.

Components of FIG. 6 may be referred to by the components of FIG. 1 through FIG. 5 described above. For example, the elastic member 212 of FIG. 6 may be referred to by the elastic member 212 of FIG. 5. The same terms and/or the same reference numerals are used for components identical or substantially identical to those described above, and redundant descriptions thereof shall be omitted.

According to an embodiment, the at least one elastic member 212 may be disposed in a corner portion of one surface of the first carrier 210. For example, the at least one elastic member may be disposed in a corner portion of an upper surface (e.g., a surface facing in the +z-axis direction) of the first carrier 210. Referring to FIG. 5, the elastic member 212 may be disposed in each corner portion of one surface of the first carrier 210.

According to an embodiment, the at least one elastic member 212 may protrude from one surface of the first carrier 210. For example, the at least one elastic member may protrude from the upper surface of the first carrier 210 in the +z-axis direction.

According to an embodiment, the at least one elastic member 212 may include a material having elasticity. For example, the at least one elastic member 212 may include, but not limited to, at least one of silicone or rubber. In one example, the at least one elastic member 212 may include a spring.

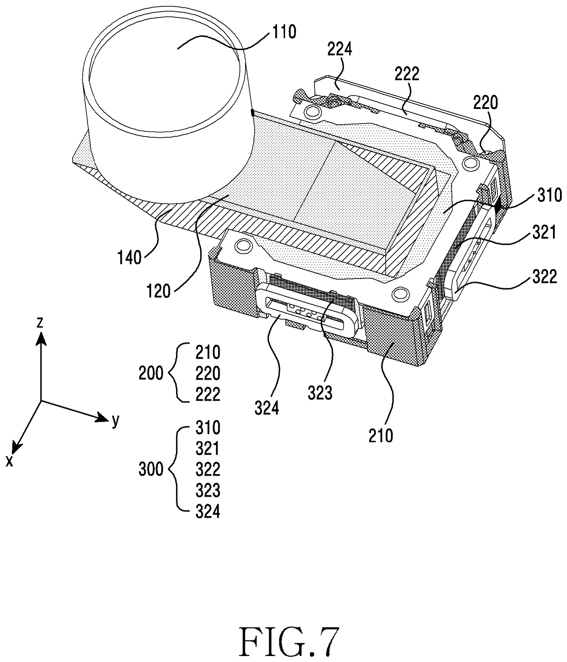

FIG. 7 is a view for illustrating a second driving unit 300 for the OIS driving of a camera module according to an embodiment.

The camera module and its components of FIG. 7 may be referred to by the camera module and its components of FIG. 1 through FIG. 6 mentioned above. The same terms and/or the same reference numerals are used for components identical or substantially identical to those described above, and redundant descriptions thereof shall be omitted.

According to an embodiment, the camera module may include the second driving unit 300 for the OIS function. The second driving unit 300 may move the image sensor (e.g., the image sensor 160 of FIG. 5) in the second direction (e.g., the x-axis direction or the -x-axis direction) and/or the third direction (e.g., the y-axis direction or the -y-axis direction). The second direction and the third direction may be different directions. However, it is not limited thereto. In one example, the second driving unit 300 may rotate or tilt the image sensor based on the optical axis (e.g., the z-axis). For example, the image sensor may be rotated or tilted based on the optical axis by electromagnetic interaction between a second magnet 321 and a second coil 322. For example, the image sensor may be rotated or tilted based on the optical axis by electromagnetic interaction between a third magnet 323 and a third coil 324.

The second driving unit 300 according to an embodiment may include an OIS actuator configured to move the image sensor for the OIS. For example, the second driving unit 300 may move the image sensor in a direction substantially perpendicular to the first direction (e.g., the z-axis direction or the -z-axis direction) in which the distance between the optical refractive member and the image sensor is changed for the OIS.

According to an embodiment, the second driving unit 300 may include a second carrier 310 for transporting the image sensor (e.g., the image sensor 160 of FIG. 5) in the second direction (e.g., the x-axis direction or the -x-axis direction). In one example, the image sensor 160 may be coupled to the second carrier 310.

According to an embodiment, the second magnet 321 may be disposed on a first side (e.g., a side facing in the third direction) of the second carrier 310. The second magnet 321 may be disposed to face the second coil 322. The second coil 322 may be disposed in the housing (e.g., housing 130 of FIG. 2) facing the first side of the second carrier 310 on which the second magnet 321 is disposed. The second carrier 310 may be moved based on the housing (e.g., the housing 130 of FIG. 2) (or, the lens assembly 110, the optical refractive member 120 or the carrier 140) by a force of the third direction (e.g., the y-axis direction or the -y-axis direction) exerted on the second magnet 321 due to a magnetic field generated by a current flowing in the second coil 322. As the second carrier 310 moves, the image sensor (e.g., the image sensor 160 of FIG. 5) may be moved in the third direction.

According to an embodiment, the third magnet 323 may be disposed on a second side (e.g., a side facing in the second direction) of the second carrier 310. The third magnet 323 may be disposed to face the third coil 324. The third coil 324 may be disposed in the housing (e.g., the housing 130 of FIG. 2) facing the second side of the second carrier 310 on which the third magnet 323 is disposed. The second carrier 310 may be moved based on the housing (e.g., the housing 130 of FIG. 2) (or, the lens assembly 110, the optical refractive member 120 or the carrier 140) by a force of the second direction (e.g., the x-axis direction or the -x-axis direction) exerted on the third magnet 323 due to a magnetic field generated by a current flowing in the third coil 324. As the second carrier 310 moves, the image sensor (e.g., the image sensor 160 of FIG. 5) may be moved in the second direction.

According to an embodiment, the first side of the second carrier 310 may be substantially perpendicular to the second side of the second carrier 310. The second magnet 321 may be disposed substantially perpendicular to the third magnet 323. The second coil 322 may be disposed substantially perpendicular to the third coil 324.

According to an embodiment, the first side of the second carrier 310 may be substantially perpendicular to the first side (e.g., the side facing in the -x-axis direction) on which the first magnet (e.g., the first magnet 221 of FIG. 3) (or, the at least one first sphere 220) of the first carrier 210 is disposed. The second magnet 321 may be disposed substantially perpendicular to the first magnet 221. The second coil 322 may be disposed substantially perpendicular to the first coil 222. The third magnet 323 may be disposed opposite to the first magnet 221. The third magnet 323 may be disposed substantially parallel to the first magnet 221. The third coil 324 may be disposed opposite to the first coil 222. The third coil 324 may be disposed substantially parallel to the first coil 222. However, it is not limited thereto.

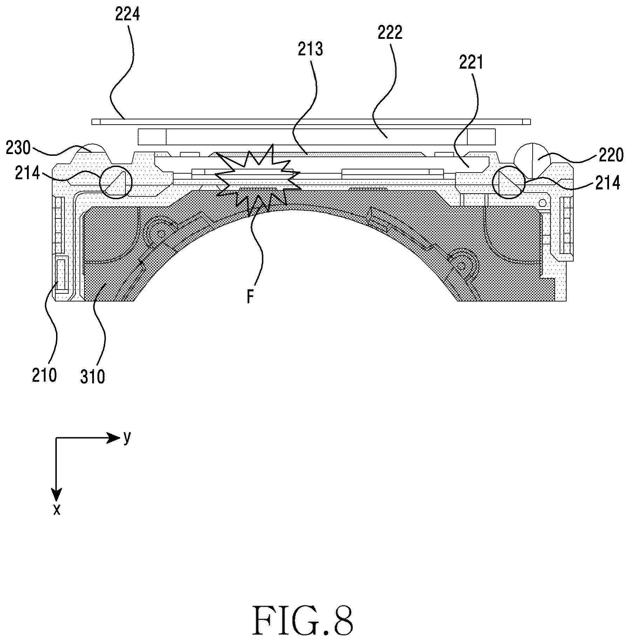

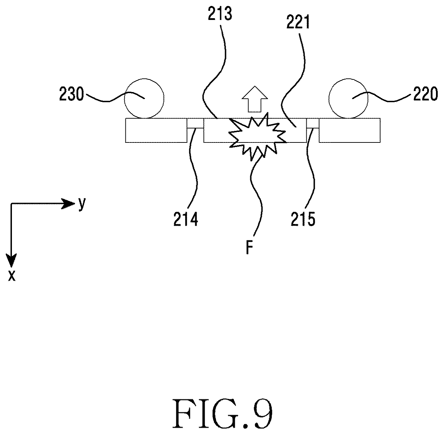

FIG. 8 is a view for illustrating an elastic member 214 according to an embodiment. FIG. 9 is a view illustrating an elastic member 214 according to an embodiment.

The camera module and its components of FIG. 8 and FIG. 9 may be referred to by the camera module and its components of FIG. 1 through FIG. 7 described above. The same terms and/or the same reference numerals are used for components identical or substantially identical to those described above, and redundant descriptions thereof shall be omitted.

According to an embodiment, the first carrier 210 may include at least one elastic member 214 formed between at least one first guide portion on which the at least one first sphere 220 is disposed and at least one second guide portion on which the at least one second sphere 230 is disposed.

According to an embodiment, the at least one elastic member 214 may be formed on a first side 213 of the first carrier 210. The at least one elastic member 214 may be disposed with a portion receiving an impact F interposed therebetween in the first side 213 of the first carrier 210. For example, the at least one elastic member 214 may be disposed with the portion receiving the impact F from the second carrier 310, interposed therebetween in the first carrier 210. For example, the at least one elastic member 214 may be formed in a portion between at least one first guide portion of the first side 213 and the portion where the first magnet 221 is disposed. For example, the at least one elastic member 214 may be formed in a portion between at least one second guide portion of the first side 213 and the portion where the first magnet 221 is disposed. For example, the at least one elastic member 214 may be formed in a portion between at least one first guide portion of the first side 213 and the portion where the first magnet 221 is disposed, and a portion between at least one second guide portion and the portion where the first magnet 221 is disposed.

According to an embodiment, the at least one elastic member 214, which is disposed with the portion receiving the impact F interposed therebetween in the first side 213 of the first carrier 210, may reduce or prevent damage to at least one of at least a part (e.g., at least one of the first magnet 221, the first coil 222, the at least one first sphere 230 or the at least one second sphere 220) of the first driving unit or the housing (e.g., the housing 130 of FIG. 2).

According to an embodiment, the thickness of the at least one elastic member 214 may gradually decrease. For example, the length of the at least one elastic member 214 in the second direction (e.g., the x-axis direction) may gradually decrease toward the portion receiving the impact F in the first side 213 of the first carrier 210.

According to an embodiment, the at least one elastic member 214 may have lower stiffness than other portions of the first side 213 of the first carrier 210. For example, the at least one elastic member 214 may be thinner in thickness than other portions of the first side 213. For example, the at least one elastic member 214 may have a shorter length in the second direction (e.g., the x-axis direction) than other portions.

According to an embodiment, the at least one elastic member 214 may include a material having lower stiffness than other portions of the first side 213 of the first carrier 210. For example, the at least one elastic member 214 may include a material having elasticity. For example, the at least one elastic member 214 may include at least one of rubber or silicone. However, it is not limited thereto.

Referring to FIG. 9, the first side 213 may include the first elastic member 214 disposed between the at least one second sphere 230 and the portion (e.g., a portion where the first magnet 221 is disposed) receiving the impact F in the first side 213, and a second elastic member 215 disposed between the at least one first sphere 220 and the portion receiving the impact F in the first side 213.

According to an embodiment, the first side 213 may include the first elastic member 214 disposed between at least one second guide portion where the at least one second sphere 230 is disposed and the portion (e.g., a portion where the first magnet 221 is disposed) receiving the impact F in the first side 213, and the second elastic member 215 disposed between at least one first guide portion where the at least one first sphere 220 is disposed and the portion receiving the impact F in the first side 213.

According to an embodiment, the at least one elastic member 214 and 215 may be a separate member from the first side 213. For example, at least one of the first elastic member 214 or the second elastic member 215 may be a separate member from the first side 213. For example, at least one of the first elastic member 214 or the second elastic member 215 may include a different material from the first side 213. However, it is not limited thereto. For example, at least one of the first elastic member 214 or the second elastic member 215 may be a single member with the first side 213. For example, at least one of the first elastic member 214 or the second elastic member 215 may include the same material as the first side 213.

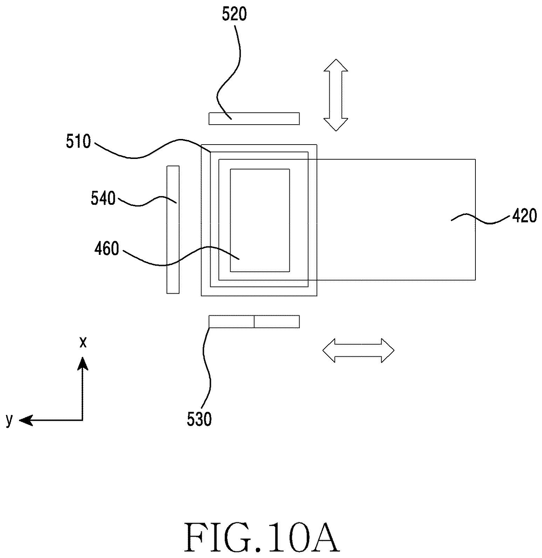

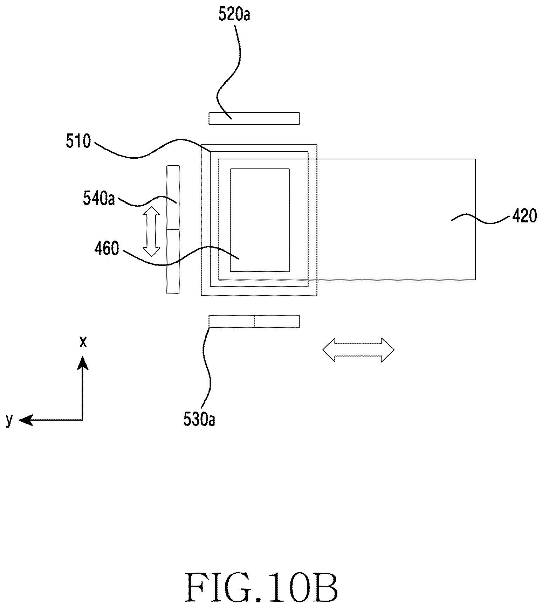

FIG. 10A is a view illustrating a driving unit for OIS driving of a camera module according to an embodiment. FIG. 10B is a view illustrating the driving unit for the OIS driving of the camera module according to an embodiment.

Contents of FIG. 10A and FIG. 10B may be referred to by the contents of FIG. 1 through FIG. 9 described above. The same terms and/or the same reference numerals are used for components identical or substantially identical to those described above, and redundant descriptions thereof shall be omitted.

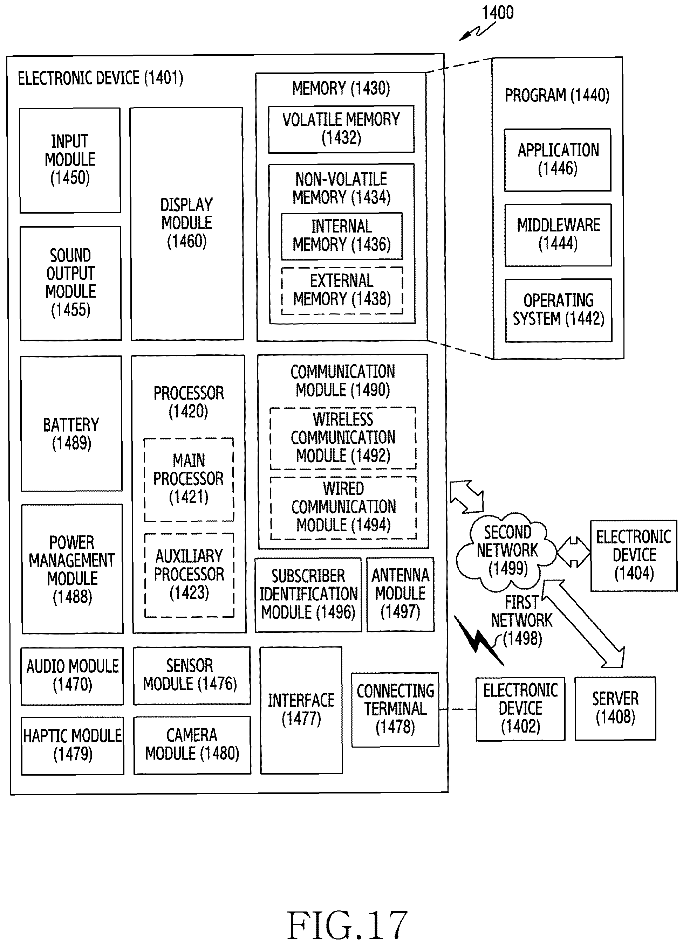

The camera module 100 according to an embodiment may control an electromagnetic force by controlling a direction and/or an intensity of a current passing through at least one coil, under control of a processor (e.g., a processor 1420 of FIG. 17), and move an image sensor 460 in at least one of the second direction (e.g., the x-axis direction or the -x-axis direction) or the third direction (e.g., the y-axis direction or the -y-axis direction) based on a prism 420 by using a Lorenz force by the electromagnetic force or a solenoid type actuator.

For example, referring to FIG. 7, the second magnet 321 may be configured to drive with the second coil 322 in the solenoid type, and the third magnet 323 may be configured to drive with the third coil 324 in the solenoid type. For example, the second magnet 321 may be disposed to be substantially perpendicular to the third magnet 323. However, it is not limited thereto.

For example, referring to FIG. 10A, the OIS driving of the camera module may be driven in a Lorenz-solenoid type. For example, a second magnet 520 for the OIS driving may be configured to drive with a second coil (not shown) in the solenoid type, and a third magnet 530 for the OIS driving may be configured to drive with a third coil (not shown) in the Lorenz type. For example, the second magnet 520 for the OIS driving may be disposed to face the third magnet 530 for the OIS driving. A first magnet 540 for the AF driving may be disposed to be substantially perpendicular to the second magnet 520 and the third magnet 530.

For example, the OIS driving of the camera module 100 may be driven in a Lorenz-Lorenz type. For example, referring to FIG. 10B, a first magnet 540a and a third magnet 530a may be magnets for the OIS driving, and a second magnet 520a may be a magnet for the AF driving. The first magnet 540a may be configured to drive with the first coil (not shown) in the Lorenz type, and the third magnet 530a may be configured to drive with the third coil (not shown) in the Lorenz type. The first magnet 540a and the third magnet 530a may include a polarizing magnet, to drive in the Lorenz type.

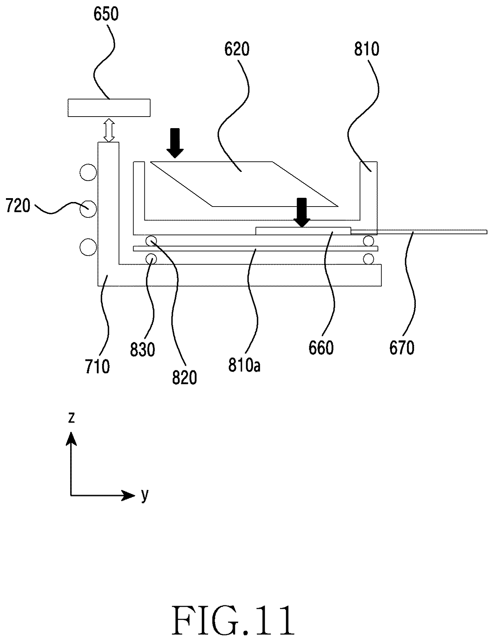

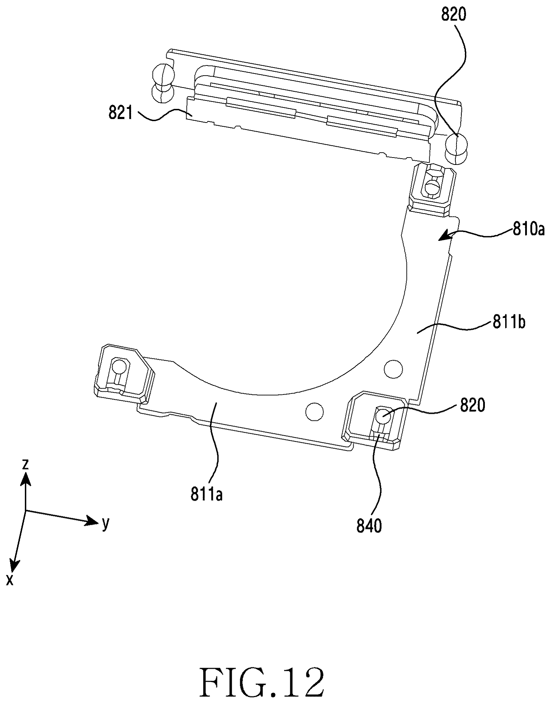

FIG. 11 is a view illustrating a driving unit of a camera module according to an embodiment. FIG. 12 is a perspective view of a driving unit for OIS driving according to an embodiment.

The camera module and its components of FIG. 11 and FIG. 12 may be referred to by the camera module and its components of FIG. 1 through FIG. 10B mentioned above. The same terms are used for components which are identical or substantially identical to those described above, and redundant descriptions thereof are omitted.

Referring to FIG. 11, the camera module according to an embodiment may include an optical refractive member 620, an image sensor 660, a first driving unit and a second driving unit. However, the configuration of the camera module is not limited thereto. For example, the camera module may further include at least one of a cover 650 or a printed circuit board 670.

According to an embodiment, the first driving unit for the AF driving may include a first carrier 710 and at least one first sphere 720. The second driving unit for the OIS driving may include a second carrier 810 coupled to the image sensor 660, and a third carrier 810a for transporting the second carrier 810 in the third direction (e.g., the y-axis direction or the -y-axis direction). For example, since the second carrier 810 is disposed on the third carrier 810a, the second carrier 810 may be transported in the third direction as the third carrier 810a moves in the third direction.

According to an embodiment, referring to FIG. 11, at least one third sphere 820 may be disposed between the second carrier 810 and the third carrier 810a. The second carrier 810 may be moved on the third carrier 810a by the at least one third sphere 820. For example, the second carrier 810 may be moved in the second direction (e.g., the x-axis direction or the -x-axis direction) based on the cover 650 or the optical refractive member 620, on the third carrier 310a by the at least one third sphere 820. However, it is not limited thereto. For example, the third carrier 810a and the at least one third sphere 820 may be omitted in the camera module according to an embodiment.

According to an embodiment, referring to FIG. 11 and FIG. 12, at least one of the second carrier 810 or the third carrier 810a may include at least one third guide portion 840 for guiding the at least one third sphere 820 to move in the second direction. The at least one third sphere 820 may be disposed on the at least one third guide portion 840. Since the at least one third sphere 820 disposed between the second carrier 810 and the third carrier 810a is guided (e.g., moved, rolled, rotated, or tilted) along the at least one third guide portion 840, the second carrier 810 may move in the second direction. If the second carrier 810 moves in the second direction, the image sensor 660 accommodated in the second carrier 810 may move together in the second direction.

According to an embodiment, at least one fourth sphere 830 may be disposed between the first carrier 710 and the third carrier 810a. The third carrier 810a may be moved on the first carrier 710 by the at least one fourth sphere 830. For example, the third carrier 810a may be moved in the third direction (e.g., the y-axis direction or the -y-axis direction) based on the cover 650 or the optical refractive member 620, on the first carrier 710 by the at least one fourth sphere 830.

According to an embodiment, at least one of the first carrier 710 or the third carrier 810a may include at least one fourth guide portion (not shown) for guiding the at least one fourth sphere 830 to move in the third direction. The at least one fourth sphere 830 may be disposed on the at least one fourth guide portion. Since the at least one fourth sphere 830 disposed between the first carrier 710 and the third carrier 810a is guided (e.g., moved, rolled, rotated, or tilted) along the at least one fourth guide portion, the third carrier 810a may move in the third direction. If the third carrier 810a moves in the third direction, the second carrier 810 accommodated in the third carrier 810a may be transported together in the third direction. If the second carrier 810 is transported in the third direction, the image sensor 660 accommodated in the second carrier 810 may be transported together in the third direction.

Referring to FIG. 12, the third carrier 810a according to an embodiment may have an 'L' shape. For example, the third carrier 810a may include a first portion 811a facing the first magnet 821, and a second portion 811b extending from the first portion 811a. The first portion 811a may be disposed to be substantially parallel to the first magnet 821, and the second portion 811b may be disposed to be substantially perpendicular to the first magnet 821. However, the shape of the third carrier 810a is not limited thereto. For example, the third carrier 810a may have a '⊏' shape or a '□' shape.

According to an embodiment, at least one of the at least one third guide portion 840 or at least one fourth guide portion (not shown) may have, but not limited to, a guide groove or rail shape. In one example, the at least one third guide portion 840 may be formed in the second direction to guide the at least one third sphere 820 along the second direction. In one example, the at least one fourth guide portion may be formed in the third direction to guide the at least one fourth sphere 830 along the third direction.

The meaning of 'guide' in this disclosure may include moving, rolling, rotating, or tilting.

According to an embodiment, FIG. 11 illustrates that at least a part (e.g., the second carrier 810 and the third carrier 810a) of the driving unit for the OIS driving (e.g., the second driving unit 300 of FIG. 7) is accommodated in at least a part (e.g., the first carrier 710) of the driving unit for the AF driving (e.g., the first driving unit 200 of FIG. 7), but is not limited thereto. For example, at least a part of the driving unit for the AF driving may be accommodated in the driving unit for the OIS driving, and at least a part of the driving unit for the AF driving may be transported in at least one of the second direction or the third direction by the driving unit for the OIS driving.

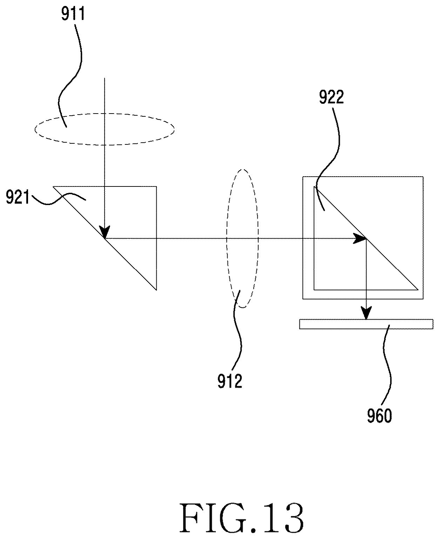

FIG. 13 is a view for illustrating an optical path according to an embodiment.

Contents of FIG. 13 may be referred to by the contents of FIG. 1 through FIG. 12.

According to an embodiment, the camera module may include a plurality of optical refractive members. For example, the camera module may include a first optical refractive member 921 and a second optical refractive member 922. The second optical refractive member 922 may be disposed to be spaced apart from the first optical refractive member 921 by a specific distance.

According to an embodiment, the second optical refractive member 922 may be disposed to refract a path of light passing through the first optical refractive member 921. For example, the second optical refractive member 922 may be disposed to refract the light path such that the light passing through the first optical refractive member 921 is incident on an image sensor 960.

According to an embodiment, the camera module may include at least one lens. The at least one lens may be disposed to form an image of a subject on the image sensor 960. For example, the camera module may include at least one first lens 911 for receiving light, and at least one second lens 912 disposed between the first optical refractive member 921 and the second optical refractive member 922.

According to an embodiment, the camera module may include the first optical refractive member 921, the at least one second lens 912, the second optical refractive member 922, and the image sensor 960. The camera module may receive light through the first optical refractive member 921. The first optical refractive member 921 may be disposed to refract the path of light received at the first optical refractive member 921. The at least one second lens 912 may be disposed to receive the light passing through the first optical refractive member 921. The second optical refractive member 922 may be disposed to receive the light passing through the at least one second lens 912. The second optical refractive member 922 may be disposed to refract the path of light passing through the at least one second lens 912. The second optical refractive member 922 may be disposed to allow the light passing through the second optical refractive member 922 to enter the image sensor 960.

According to an embodiment, the camera module may include the at least one first lens 911, the first optical refractive member 921, the second optical refractive member 922, and the image sensor 960. The camera module may receive light through the at least one first lens 911. The first optical refractive member 921 may be disposed to receive the light passing through the at least one first lens 911. The first optical refractive member 921 may be disposed to refract the path of the light passing through the at least one first lens 911. The second optical refractive member 921 may be disposed to receive the light refracted through the first optical refractive member 921. The second optical refractive member 921 may be disposed to refract the path of the light passing through the first optical refractive member 921. The second optical refractive member 921 may be disposed such that the light passing through the second optical refractive member 921 enters the image sensor 960.

According to an embodiment, the camera module may include the at least one first lens 911, the first optical refractive member 921, the at least one second lens 912, the second optical refractive member 922 and the image sensor 960. The camera module may receive light through the at least one first lens 911. The first optical refractive member 921 may be disposed to receive the light passing through the at least one first lens 911. The first optical refractive member 921 may be disposed to refract the path of the light passing through the at least one first lens 911. The at least one second lens 912 may be disposed to receive the light passing through the first optical refractive member 921. The second optical refractive member 922 may be disposed to receive the light passing through the at least one second lens 912. The second optical refractive member 921 may be disposed to refract the path of the light passing through the first optical refractive member 921. The second optical refractive member 921 may be disposed to allow the light passing through the second optical refractive member 921 to enter the image sensor 960.

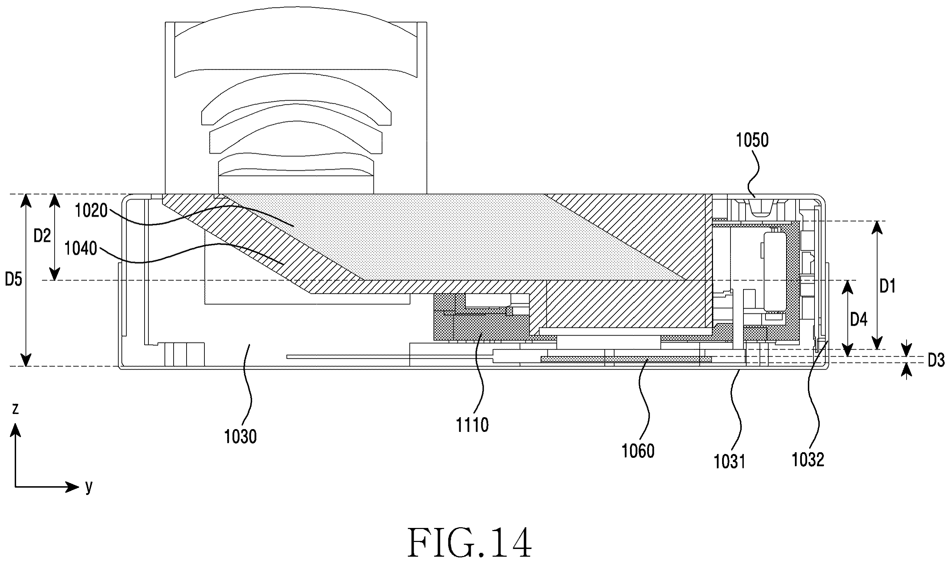

FIG. 14 is a cross-sectional view of a camera module according to an embodiment.

The camera module and its components of FIG. 14 may be referred to by the camera module and its components of FIG. 1 through FIG. 13. The same terms and/or the same reference numerals are used for components identical or substantially identical to those described above, and redundant description thereof shall be omitted.

According to an embodiment, a housing 1030 may include a base 1031 and a side portion 1032 extending from one end of the base 1031. The side portion 1032 may surround at least a part of the base 1031. Various components of the camera module may be disposed on the base 1031.

According to an embodiment, a cover 1050 may cover at least a part of the housing 1030. For example, the cover 1050 may cover at least a part of the side 1032. At least a part of the cover 1050 may face the base 1031. For example, an upper surface (e.g., a surface facing in the +z-axis direction) of the cover 1050 may face the base 1031. The cover 1050 may form a space therein, by covering at least a part of the housing 1030. Various components of the camera module may be disposed inside the space formed by the housing 1030 and the cover 1050.

According to an embodiment, at least one of the housing 1030 or the cover 1050 may restrict a movement range of the driving unit of the camera module. For example, the side portion 1032 of the housing 1030 may restrict the movement range of the second driving unit (e.g., the second driving unit 300 of FIG. 7) in at least one of the second direction (e.g., the x-axis direction or the -x-axis direction) or the third direction (e.g., the y-axis direction or the -y-axis direction). For example, the cover 1050 may limit the movement range of the first driving unit (e.g., the first driving unit 200 of FIG. 3) in the first direction (e.g., the z-axis direction or the -z-axis direction).

According to an embodiment, referring to FIG. 14, the first carrier 1110 may have a first length D1 in the first direction (e.g., the z-axis direction or the -z-axis direction). For example, a second side of the first carrier, which faces in an opposite direction (e.g., the +x-direction) to the first side of the first carrier (e.g., the first side of the first carrier 210 of FIG. 3), may have the first length D1 (e.g., the first length R1 of FIG. 3) in the first direction. In one example, the first side of the first carrier may include a side on which at least one of at least one first sphere (e.g., the at least one first sphere 220 of FIG. 3) or at least one second sphere (e.g., the at least one second sphere 230 of FIG. 3) is disposed. For example, the first side of the first carrier may include at least one first guide portion for guiding the at least one first sphere to move in the first direction. For example, the first side of the first carrier may include at least one second guide portion for guiding the at least one second sphere to move in the first direction. For example, the first side of the first carrier may include the at least one first guide portion and the at least one second guide portion. In one example, the second side of the first carrier may include a side on which at least one of the at least one first sphere (e.g., the at least one first sphere 220 of FIG. 3) or the at least one second sphere (e.g., the at least one second sphere 230 of FIG. 3) is not disposed. In one example, a height of the first side of the first carrier may be different from a height of the second side of the first carrier. For example, in the first direction, the height of the first side of the first carrier may be greater than or equal to the height of the second side of the first carrier. However, it is not limited thereto.

According to an embodiment, an optical refractive member 1020 may have a second length D2 in the first direction. The image sensor 1060 may have a third length D3 in the first direction. The optical refractive member 1020 may be spaced apart from the image sensor 1060 in the first direction by a fourth length D4. For example, the fourth length D4 may be a back focal length (BFL) value. The camera module may have a fifth length D5 in the first direction. For example, the fifth length D5 may be a length from the base 1031 to an upper surface (e.g., a surface facing in the +z-axis direction) of the cover 1050. According to an embodiment, the first length D1 may be smaller than a sum of the second length D2, the third length D3, and the fourth length D4. Since the first length D1 is smaller than the sum of the second length D, the third length D3 and the fourth length D4, the height of the camera module may be reduced. For example, the fifth length D5 may be reduced.

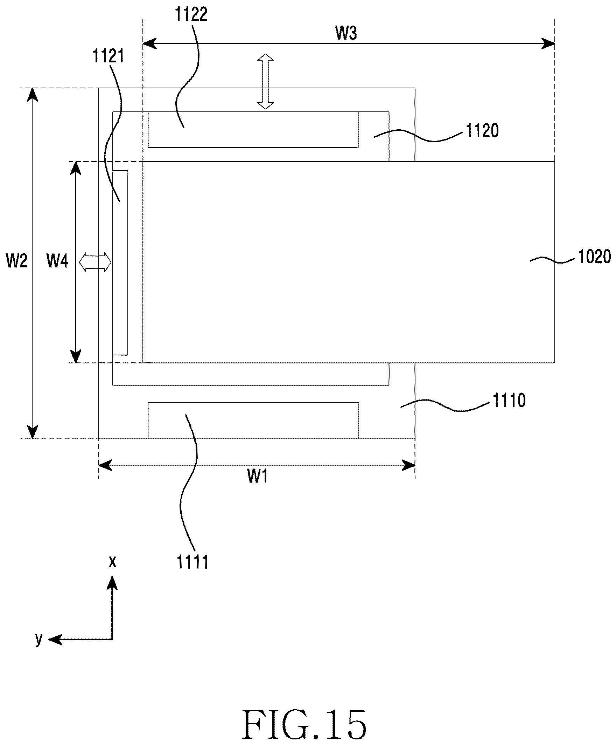

FIG. 15 is a view illustrating a carrier and an optical refractive member according to an embodiment.

Components of FIG. 15 may be referred to by the components of FIG. 1 through FIG. 14 mentioned above. The same terms and/or the same reference numerals are used for components identical or substantially identical to those described above, and redundant descriptions thereof shall be omitted.

Referring to FIG. 15, a first carrier 1110 according to an embodiment may have a first magnet 1111 disposed on a first side (e.g., a side facing in the -x-axis direction) of the first carrier 1110. A second carrier 1120 may have a second magnet 1121 disposed on a first side (e.g., a side facing in the +y-axis direction) of the second carrier 1120, and a third magnet 1122 disposed on a second side (e.g., a side facing in the +x-axis direction) of the second carrier 1120.

According to an embodiment, the first carrier 1110 may have a first width W1 in the third direction (e.g., the y-axis direction or the -y-axis direction), and a second width W2 in the second direction (e.g., the x-axis direction or the -x-axis direction). For example, the first side of the first carrier 1110 may have the first width W1. For example, when the first carrier 1110 is viewed from the first direction (e.g., the z-axis direction or the -z-axis direction), the first carrier 1110 may have the first width W1 in the third direction, and the second width W2 in the second direction. For example, when the camera module is viewed from above, the first carrier 1110 may have the first width W1 in the third direction, and the second width W2 in the second direction.

According to an embodiment, the optical refractive member 1020 may have a third width W3 in the third direction, and a fourth width W4 in the second direction. For example, when the optical refractive member 1020 is viewed from the first direction, the optical refractive member 1020 may have the third width W3 in the third direction and the fourth width W4 in the second direction. For example, when the camera module is viewed from above, the optical refractive member 1020 may have the third width W3 in the third direction and the fourth width W4 in the second direction.

According to an embodiment, the first width W1 may be smaller than the third width W3. The second width W2 may be greater than the fourth width W4. However, it is not limited thereto.

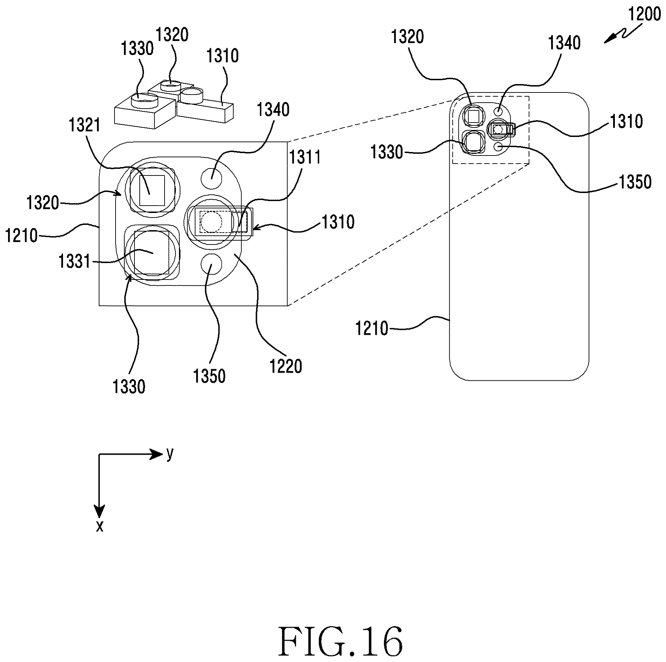

FIG. 16 is a view for illustrating an electronic device 1200 including a camera module according to an embodiment.

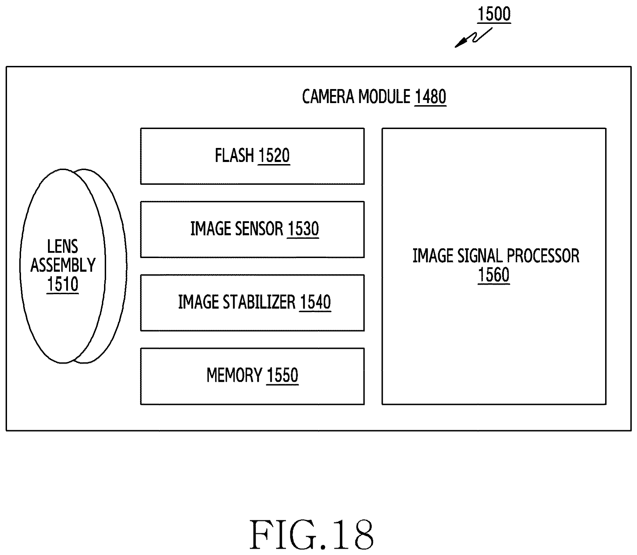

The electronic device 1200 of FIG. 16 may be referred to by the electronic device 1401 of FIG. 17 and/or the electronic device 1500 of FIG. 18. The camera module of FIG. 16 may be referred to by the camera module of FIG. 1 through FIG. 15 described above. For example, the first camera module 1310 of FIG. 16 may be referred to by the camera module 100 of FIG. 1. The same terms and/or the same reference numerals are used for components identical or substantially identical to those described above, and redundant descriptions thereof shall be omitted.

The electronic device 1200 according to an embodiment may include a plurality of camera modules. For example, referring to FIG. 16, the electronic device 1200 may include a first camera module 1310, a second camera module 1320 and a third camera module 1330. However, the components of the electronic device 1200 are not limited thereto. For example, the electronic device 1200 may omit at least one of the components described above, or may further include at least one other component. For example, the electronic device 1200 may include at least one of a flash 1340, a sensor module 1350, at least one processor (e.g., the processor 1420 of FIG. 17) for controlling the operation of the camera module (e.g., the first camera module 1310), or a cover member 1220 disposed on a rear plate (e.g., a plate facing in the +z-axis direction) of the electronic device 1200.

According to an embodiment, the first camera module 1310 may include a tele camera. In one example, the first camera module 1310 may include a folded camera. The second camera module 1320 may include an ultra-wide camera. The third camera module 1330 may include a wide camera. However, the type and the number of the camera modules illustrated in FIG. 16 are only exemplary and do not limit the scope of the disclosure. According to an embodiment, the camera module (e.g., the camera module 100 of FIG. 1) of the disclosure may be applied to a telephoto camera. However, it is not limited thereto.

According to an embodiment, the flash 1340 may include a light emitting diode or a xenon lamp. However, it is not limited thereto.

According to an embodiment, the electronic device 1200 may include a sensor module 1350, to thus generate an electric signal or a data value corresponding to an internal operating state or an external environmental state. According to an embodiment, the sensor module 1350 may include a distance sensor. However, it is not limited thereto. For example, the sensor module 1350 may further include at least one of a proximity sensor, a fingerprint sensor, and/or a biometric sensor (e.g., an heart rate monitor (HRM) sensor), a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, and an illuminance sensor.

According to an embodiment, the cover member 1220 may include, but not limited to, glass.

According to an embodiment, at least one of the flash 1340 or the sensor module 1350 may be disposed on the rear plate of the electronic device 1200. For example, at least one of the flash 1340 or the sensor module 1350 may be disposed on the cover member 1220.

According to an embodiment, at least one camera module may be disposed on the rear plate of the electronic device 1200. For example, at least one camera module may be disposed on the cover member 1220. For example, referring to FIG. 16, the first camera module 1310, the second camera module 1320, and the third camera module 1330 may be disposed on the cover member 1220.

According to an embodiment, the second camera module 1320 and the third camera module 1330 may be disposed adjacent to an edge 1210 of the electronic device 1200. The first camera module 1310 may be disposed further away from the edge 1210 of the electronic device 1200 than the second camera module 1320 and the third camera module 1330.

According to an embodiment, the first camera module 1310 may be disposed between the flash 1340 and the sensor module 1350. For example, the first camera module 1310 may be disposed between the flash 1340 and the sensor module 1350 in the second direction (e.g., the x-axis direction or the -x-axis direction). According to an embodiment, an opening for the first camera module 1310 may be disposed between an opening for the flash 1340 and an opening for the sensor module 1350.

According to an embodiment, the first camera module 1310 may include a first image sensor 1311. For example, the first image sensor 1311 may be referred to by the image sensor 160 of FIG. 2. The second camera module 1320 may include a second image sensor 1321. The third camera module 1330 may include a third camera module 1331.

According to an embodiment, the first image sensor 1311 may be disposed substantially in parallel with at least one of the second image sensor 1321 or the third image sensor 1331.

According to an embodiment, at least one of the first image sensor 1311, the second image sensor 1321 or the third image sensor 1331 may be disposed in the second direction (e.g., the x-axis direction or the -x-axis direction) as the longitudinal direction. For example, the first image sensor 1311, the second image sensor 1321 and the third image sensor 1331 may be disposed in the second direction as the longitudinal direction. In the disclosure, the longitudinal direction may indicate a direction of a long side of one member.

FIG. 17 is a block diagram of an electronic device 1401 in a network environment 1400, according to various embodiments.

Referring to FIG. 17, the electronic device 1401 in the network environment 1400 may communicate with an electronic device 1402 over a first network 1498 (e.g., a short-range wireless communication network), or may communicate with at least one of an electronic device 1404 or a server 1408 over a second network 1499 (e.g., a long-range wireless communication network). According to an embodiment, the electronic device 1401 may communicate with the electronic device 1404 via the server 1408. According to an embodiment, the electronic device 1401 may include a processor 1420, a memory 1430, an input module 1450, a sound output module 1455, a display module 1460, an audio module 1470, a sensor module 1476, an interface 1477, a connection terminal 1478, a haptic module 1479, a camera module 1480, a power management module 1488, a battery 1489, a communication module 1490, a subscriber identification module 1496, or an antenna module 1497. In an embodiment, at least one (e.g., the connection terminal 1478) of the components may be omitted, or one or more other components may be added in the electronic device 1401. In an embodiment, some (e.g., the sensor module 1476, the camera module 1480, or the antenna module 1497) of the components may be integrated into a single component (e.g., the display module 1460).

The processor 1420 may, for example, execute software (e.g., a program 1440) to thus control at least one other component (e.g., a hardware or software component) of the electronic device 1401 coupled to the processor 1420, and perform various data processing or computations. According to an embodiment, as at least a part of the data processing or computation, the processor 1420 may store a command or data received from other component (e.g., the sensor module 1476 or the communication module 1490) in a volatile memory 1432, process the command or the data stored in the volatile memory 1432, and store resulting data in a non-volatile memory 1434. According to an embodiment, the processor 1420 may include a main processor 1421 (e.g., a central processing device or an application processor) or an auxiliary processor 1423 (e.g., a graphics processing device, a neural processing portion (NPU), an image signal processor, a sensor hub processor, or a communication processor) for operating independently from or in conjunction with it. For example, if the electronic device 1401 includes the main processor 1421 and the auxiliary processor 1423, the auxiliary processor 1423 may be configured to use lower power than the main processor 1421, or to be specific for a designated function. The auxiliary processor 1423 may be implemented as separately from, or as a part of the main processor 1421.

The auxiliary processor 1423 may control at least some of functions or states related to at least one component (e.g., the display module 1460, the sensor module 1476, or the communication module 1490) of the components of the electronic device 1401, for example, instead of the main processor 1421 while the main processor 1421 is in an inactive (e.g., sleeping) state, or together with the main processor 1421 while the main processor 1421 is in an active state (e.g., executing an application). According to an embodiment, the auxiliary processor 1423 (e.g., an image signaling processor or a communication processor) may be implemented as a part of other component (e.g., the camera module 1480 or the communication module 1490) functionally related. According to an embodiment, the auxiliary processor 1423 (e.g., the NPU) may include a hardware structure specified for artificial intelligence model processing. An artificial intelligence model may be generated through machine learning. Such learning may be performed, for example, by the electronic device 1401 where the artificial intelligence is conducted, or via a separate server (e.g., the server 1408). A learning algorithm may include, but not limited to, for example, supervised learning, unsupervised learning, semi-supervised learning or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-networks or a combination of two or more of them, but is not limited thereto. The artificial intelligence model may, additionally or alternatively, include a software structure, in addition to the hardware structure.

The memory 1430 may store various data used by at least one component (e.g., the processor 1420 or the sensor module 1476) of the electronic device 1401. The data may include, for example, software (e.g., the program 1440), and input data or output data for a command related thereto. The memory 1430 may include the volatile memory 1432 or the non-volatile memory 1434.

The program 1440 may be stored as software in the memory 1430, and may include, for example, an operating system 1442, middleware 1444 or an application 1446.

The input module 1450 may receive a command or data to be used by the component (e.g., the processor 1420) of the electronic device 1401 from outside (e.g., a user) of the electronic device 1401. The input module 1450 may include, for example, a microphone, a mouse, a keyboard, a key (e.g., a button), or a digital pen (e.g., a stylus pen).

The sound output module 1455 may output a sound signal to the outside of the electronic device 1401. The sound output module 1455 may include, for example, a speaker or a receiver. The speaker may be used for a general use such as multimedia playing or record playing. The receiver may be used to receive an incoming call. According to an embodiment, the receiver may be implemented separately from, or as a part of the speaker.

The display module 1460 may visually provide information to the outside (e.g., the user) of the electronic device 1401. The display module 1460 may include, for example, a display, a hologram device, or a projector and control circuitry for controlling a corresponding device. According to an embodiment, the display module 1460 may include a touch sensor configured to detect a touch, or a pressure sensor configured to measure an intensity of a force generated by the touch.

The audio module 1470 may convert a sound into an electrical signal, or convert an electrical signal into a sound. According to an embodiment, the audio module 1470 may obtain the sound via the input module 1450, or output the sound via the sound output module 1455, or an external electronic device (e.g., the electronic device 1402) (e.g., a speaker or a headphone) directly or wirelessly connected with the electronic device 1401.

The sensor module 1476 may detect an operation state (e.g., a power or a temperature) of the electronic device 1401, or an external environment state (e.g., a user state), and generate an electrical signal or a data value corresponding to the detected state. According to an embodiment, the sensor module 1476 may include, for example, a gesture sensor, a gyro sensor, a barometric sensor, a magnetic sensor, an acceleration sensor, a grip sensor, a proximity sensor, a color sensor, an IR sensor, a biosensor, a temperature sensor, a humidity sensor, or an illuminance sensor.

The interface 1477 may support one or more designated protocols to be used for the electronic device 1401 to connect with the external electronic device (e.g., the electronic device 1402) directly or wirelessly. According to an embodiment, the interface 1477 may include, for example, a high definition multimedia interface (HDMI), a universal serial bus (USB) interface, a secure digital (SD) card interface, or an audio interface.

The connection terminal 1478 may include a connector for physically connecting the electronic device 1401 with the external electronic device (e.g., the electronic device 1402). According to an embodiment, the connection terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a motion) or an electrical stimulus to be recognized by the user through tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least a part of, for example, a power management integrated circuit (PMIC).

The battery 1489 may supply the power to at least one component of the electronic device 1401. According to an embodiment, the battery 1489 may include, for example, a primary cell which is not rechargeable, a secondary cell which is rechargeable or a fuel cell.

The communication module 1490 may support establishment of a direct (e.g., wired) communication channel or a wireless communication channel between the electronic device 1401 and the external electronic device (e.g., the electronic device 1402, the electronic device 1404, or the server 1408), and communication over the established communication channel. The communication module 1490 may include one or more communication processors operated independently from the processor 1420 (e.g., the application processor), and supporting the direct (e.g., wired) communication or the wireless communication. According to an embodiment, the communication module 1490 may include a wireless communication module 1492 (e.g., a cellular communication module, a short-range wireless communication module, or a GNSS communication module) or a wired communication module 1494 (e.g., a local region network (LAN) communication module, or a power line communication module). A corresponding communication module of these communication modules may communicate with the external electronic device 1404 via the first network 1498 (e.g., a short-range communication network such as Bluetooth, wireless-fidelity (Wi-Fi) direct, or infrared data association (IrDA)) or the second network 1499 (e.g., a long-range communication network such as a legacy cellular network, a 5th (5G) network, a next-generation communication network, Internet, or a computer network (e.g., a LAN or a wide area network (WAN)). These various communication modules may be integrated as a single component (e.g., a single chip), or may be implemented as a plurality of separate components (e.g., multiple chips). The wireless communication module 1492 may identify and authenticate the electronic device 1401 in the communication network such as the first network 1498 or the second network 1499 using subscriber information (e.g., international mobile subscriber identity (IMSI)) stored in the subscriber identification module 1496.

The wireless communication module 1492 may support a 5G network after a 4G network and a next-generation communication technology, for example, a new radio (NR) access technology. The NR access technology may support high-speed transmission of high-capacity data (enhanced mobile broadband (eMBB)), minimization of terminal power and connection of multiple terminals (massive machine type communications (mMTC)), or high reliability and low latency (ultra-reliable and low-latency communications (URLLC)). The wireless communication module 1492 may support, for example, a high-frequency band (e.g., millimeter waves (mmWave) band), to achieve a high data transmission rate. The wireless communication module 1492 may support various technologies for securing performance in the high-frequency band, for example, techniques such as beamforming, massive multiple-input and multiple-output (MIMO), full dimensional (FD)-MIMO, an array antenna, analog beamforming, or a large scale antenna. The wireless communication module 1492 may support various requirements specified in the electronic device 1401, the external electronic device (e.g., the electronic device 1404), or a network system (e.g., the second network 1499). According to an embodiment, the wireless communication module 1492 may support a peak data rate (e.g., 20 Gbps or more) for realizing the eMBB, loss coverage (e.g., 164 dB or smaller) for realizing the mMTC, or U-plane latency (e.g., 0.5 ms or smaller for each of downlink (DL) and uplink (UL), or 1 ms or smaller for round trip) for realizing the URLLC.

The antenna module 1497 may transmit or receive a signal or power to or from the outside (e.g., the external electronic device). According to an embodiment, the antenna module 1497 may include an antenna including a radiator formed of a conductor or a conductive pattern formed on a substrate (e.g., a printed circuit board (PCB)). According to an embodiment, the antenna module 1497 may include a plurality of antennas (e.g., array antennas). In this case, at least one antenna appropriate for a communication scheme used in the communication network such as the first network 1498 or the second network 1499 may be selected, for example, by the communication module 1490 from the plurality of the antennas. The signal or the power may be transmitted or received between the communication module 1490 and the external electronic device via the at least one antenna selected. According to some embodiment, other component (e.g., a radio frequency integrated circuit (RFIC)) than the radiator may be additionally formed as a part of the antenna module 1497.

According to various embodiments, the antenna module 1497 may form an mmWave antenna module. According to an embodiment, the mmWave antenna module may include a PCB, an RFIC disposed on or adjacent to a first surface (e.g., a bottom surface) of the PCB and supporting a designated high frequency band (e.g., the mmWave band), and a plurality of antennas (e.g., array antennas) disposed on or adjacent to a second surface (e.g., a top surface or a side surface) of the PCB and transmitting or receiving signals of the designated high frequency band.

At least some of the components may be connected to each other through an inter-peripheral communication scheme (e.g., a bus, general purpose input and output (GPIO), serial peripheral interface (SPI), or mobile industry processor interface (MIPI)) and exchange signals (e.g., commands or data) therebetween.

According to an embodiment, a command or data may be transmitted or received between the electronic device 1401 and the external electronic device 1404 via the server 1408 connected to the second network 1499. The external electronic device 1402 or 1404 may be a device of the same or different type as or from the electronic device 1401. According to an embodiment, all or some of operations executed at the electronic device 1401 may be carried out at one or more of the external electronic devices 1402, 1404, or 1408. For example, if the electronic device 1401 needs to perform a function or a service automatically, or in response to a request from the user or other device, the electronic device 1401 may request one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 1401. The electronic device 1401 may provide the result as at least a part of a response to the request, without or with further processing of the result. For doing so, for example, cloud computing, distributed computing, mobile edge computing (MEC), or client-server computing technology may be used. The electronic device 1401 may provide an ultra-low delay service using, for example, the distributed computing or the MEC. In an embodiment, the external electronic device 1404 may include an Internet of things (IoT) device. The server 1408 may be an intelligent server using the machine learning and/or a neural network. According to an embodiment, the external electronic device 1404 or the server 1408 may be included in the second network 1499. The electronic device 1401 may be applied to an intelligent service (e.g., smart home, smart city, smart car, or healthcare) based on a 5G communication technology and an IoT-related technology.

The electronic device according to various embodiments disclosed in the disclosure may be a device of various types. The electronic device may include, for example, a portable communication device (e.g., a smartphone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and embrace various modifications, equivalents, or alternatives of a corresponding embodiment. With respect to the descriptions of the drawings, similar reference numerals may be used for similar or related elements. A singular form of a noun corresponding to an item may include one or more of the items, unless the relevant context clearly indicates otherwise. As used herein, each of such phrases as "A or B", "at least one of A and B", "at least one of A or B", "A, B, or C", "at least one of A, B, and C", and "at least one of A, B, or C", may include one, or all possible combinations of the items enumerated together in a corresponding one of the phrases. Such terms as "1st" and "2nd", or "first" and "second" may be used to simply distinguish a corresponding component from another, and do not limit the corresponding components in other aspect (e.g., importance or order). If an element (e.g., a first element) is referred to, with or without the term "operatively" or "communicatively", as "coupled" or "connected" to another element (e.g., a second element), it means that the element may be coupled with the other element directly (e.g., wiredly), wirelessly, or via a third element.

The term "module" used in various embodiments of the disclosure may include a unit implemented in hardware, software or firmware, and may be interchangeably used with a term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 1440) including one or more instructions which are stored in a storage medium (e.g., the internal memory 1436 or the external memory 1438) readable by a machine (e.g., the electronic device 1401). For example, a processor (e.g., the processor 1420) of the machine (e.g., the electronic device 1401) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply means that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). In the online distribution, at least a part of the computer program product may be temporarily stored in the machine-readable storage medium such as a memory of a manufacturer's server, an application store server, or a relay server, or may be temporarily generated.

According to various embodiments, each component (e.g., a module or a program) of the above-described components may include a single entity or multiple entities, and some of the multiple entities may be separately deployed in different components. According to various embodiments, one or more components or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of the components in the same or similar manner as they are performed by a corresponding component of the plurality of the components before the integration. According to various embodiments, operations performed by the module, the program or other component may be carried out sequentially, in parallel, repeatedly, or heuristically, one or more of the operations may be executed in a different order or omitted, or one or more other operations may be added.

FIG. 18 is a block diagram 1500 illustrating a camera module 1480, according to various embodiments.

Referring to FIG. 18, the camera module 1480 may include a lens assembly 1510, a flash 1520, an image sensor 1530, an image stabilizer 1540, a memory 1550 (e.g., a buffer memory), or an image signal processor 1560. The lens assembly 1510 may collect light emitted from a subject to be captured for an image. The lens assembly 1510 may include one or more lenses. According to an embodiment, the camera module 1480 may include a plurality of lens assemblies 1510. In this case, the camera module 1480 may form, for example, a dual camera, a 360-degree camera, or a spherical camera. Some of the plurality of the lens assemblies 1510 may have the same lens properties (e.g., an angle of view, a focal length, auto focus, an f number, or optical zoom), or at least one lens assembly may have one or more lens properties different from the lens properties of the other lens assemblies. The lens assembly 1510 may include, for example, a wide-angle lens or a telephoto lens.

The flash 1520 may emit light used to enhance the light emitted or reflected from the subject. According to an embodiment, the flash 1520 may include one or more light emitting diodes (e.g., a red-green-blue (RGB) LED, a white LED, an infrared LED, or an ultraviolet LED), or a xenon lamp. The image sensor 1530 may convert the light emitted or reflected from the subject and transmitted through the lens assembly 1510 into an electrical signal, and thus acquire an image corresponding to the subject. According to an embodiment, the image sensor 1530 may include one image sensor selected from image sensors having different properties, for example, an RGB sensor, a black and white (BW) sensor, an IR sensor, or an ultraviolet (UV) sensor, a plurality of image sensors having the same properties, or a plurality of image sensors having different properties. The image sensors included in the image sensor 1530 each may be implemented using, for example, a charged coupled device (CCD) sensor or a complementary metal oxide semiconductor (CMOS) sensor.

The image stabilizer 1540 may, in response to a movement of the camera module 1480 or the electronic device (e.g., the electronic device 1401 of FIG. 15) including the same, move at least one lens or the image sensor 1530 included in the lens assembly in a specific direction or control an operational attribute of the image sensor 1530 (e.g., adjust a read-out timing). This allows to compensate for at least a part of a negative effect by the movement on the captured image. According to an embodiment, the image stabilizer 1540 may detect such a movement of the camera module 1480 or the electronic device 1401 using a gyro sensor (not shown) or an acceleration sensor (not shown) disposed inside or outside the camera module 1480, according to an embodiment. According to an embodiment, the image stabilizer 1540 may be implemented with, for example, an optical image stabilizer. The memory 1550 may at least temporarily store at least a part of the image obtained through the image sensor 1530 for a subsequent image processing task. For example, if the image acquisition is delayed due to shutter lag or multiple images are captured quickly, a raw image acquired (e.g., a Bayer-patterned image or a high-resolution image) may be stored in the memory, and its corresponding copy image (e.g., a low-resolution image) may be previewed through a display device (e.g., the display module 1460). Next, if a designated condition is satisfied (e.g., a user input or a system command), at least a part of the raw image stored in the memory 1550 may be obtained and processed, for example, by the image signal processor 1560. According to an embodiment, the memory 1550 may be configured as at least a part of the memory 1550, or as a separate memory operated independently.

The image signal processor 1560 may perform one or more image processing on an image obtained through the image sensor 1530 or an image stored in the memory 1550. The one or more image processing may include, for example, depth map generation, 3D modeling, panorama generation, feature point extraction, image synthesizing, or image compensation (e.g., noise reduction, resolution adjustment, brightness adjustment, blurring, sharpening, or softening). Additionally or alternatively, the image signal processor 1560 may control (e.g., control exposure time, or control read-out timing) at least one (e.g., the image sensor 1530) of the components included in the camera module 1480. The image processed by the image signal processor 1560 may be stored back in the memory 1550 for further processing, or may be provided to an external component (e.g., the memory 1430, the display module 1460, the electronic device 1402, the electronic device 1404, or the server 1408 of FIG. 15) of the camera module 1480. According to an embodiment, the image signal processor 1560 may be configured as at least a part of the processor 1420 of FIG. 15, or as a separate processor operated independently from the processor 1420. If the image signal processor 1560 is configured as the separate processor from the processor 1420, at least one image processed by the image signal processor 1560 may be displayed on the display module 1460 as it is or after further image processing by the processor 1420.

According to an embodiment, the electronic device 1401 may include a plurality of camera modules 1480 each having different properties or capabilities. In this case, for example, at least one of the plurality of the camera modules 1480 may be a wide-angle camera, and at least another one may be a telephoto camera. Similarly, at least one of the plurality of the camera modules 1480 may be a front camera, and at least another one may be a rear camera.

As set forth above, a camera module (e.g., the camera module 100 of FIG. 1) may include a lens assembly (e.g., the lens assembly 110 of FIG. 1) including at least one lens, an optical refractive member (e.g., the optical refractive member 120 of FIG. 1) disposed to a path of light passing through at least a part of the at least one lens, an image sensor (e.g., the image sensor of FIG. 2) for converting the light received through the at least one lens and the optical refractive member into an electrical signal, a housing (e.g., the housing 130 of FIG. 1) for accommodating the optical refractive member and the image sensor, a first driving unit (e.g., the first driving unit 200 of FIG. 3) for moving the image sensor within an internal space formed by the housing in a first direction in which a distance between the optical refractive member and the image sensor is changed, and a second driving unit (e.g., the second driving unit 300 of FIG. 7) for moving the image sensor in at least one of a second direction or a third direction which is different from the second direction based on the housing. The first driving unit may include a first carrier (e.g., the first carrier 210 of FIG. 3) for transporting at least a part of the second driving unit which accommodates the image sensor in the first direction, and at least one first sphere (e.g., the at least one first sphere 220 of FIG. 3) interposed between the first carrier and the housing and disposed to move the first carrier in the first direction with respect to the housing.

According to an embodiment, the first driving unit may include a first magnet (e.g., the first magnet 220 of FIG. 3) disposed on a first side of the first carrier and a first coil (e.g., the first magnet 222 of FIG. 3) disposed to face the first magnet.

According to an embodiment, the first carrier may include at least one first guide portion (e.g., the at least one first guide portion 240 of FIG. 3) disposed on the first side of the first carrier and guiding the at least one first sphere to move in the first direction.

According to an embodiment, the first driving member may include at least one second sphere (e.g., the at least one second sphere 230 of FIG. 3) disposed between the housing and the first carrier and allowing movement of the first carrier. The first carrier may include at least one second guide portion (e.g., the at least one second guide portion 250 of FIG. 3) for guiding the at least one second sphere to move in the first direction on the first side of the first carrier. The first carrier may include at least one elastic member (e.g., the at least one elastic member 214 of FIG. 8) formed between the first guide portion and the second guide portion to have lower rigidity than other portions of the first side of the first carrier.

According to an embodiment, the first driving member may include at least one second guide portion disposed between the housing and the first carrier, and allowing movement of the first carrier. The first carrier may include at least one second guide portion for guiding the at least one second sphere to move in the first direction on the first side of the first carrier. The first magnet may be disposed between the at least one first guide portion and the at least one second guide portion.

According to an embodiment, the camera module may include a first yoke (e.g., the first yoke 224 of FIG. 4) disposed to face the first magnet, and a second yoke (e.g., the second yoke 225 of FIG. 4) facing the first magnet and disposed between the first yoke and the at least one first sphere. The second yoke may be disposed at a position biased toward the at least one first sphere relative to the at least one second sphere.

According to an embodiment, a size of the at least one first sphere has a first size, and a size of the at least one second sphere has a second size smaller than the first size.

According to an embodiment, the second driving unit may include a second carrier (e.g., the second carrier 310 of FIG. 7) coupled with the image sensor and transporting the image sensor in at least one of the second direction or the third direction, and at least one third sphere disposed between the first carrier and the second carrier to allow the second carrier to move on the first carrier.

According to an embodiment, the second carrier may transport the image sensor in the second direction. The second driving unit may further include a third carrier for transporting the second carrier coupled with the image sensor in the third direction and at least one fourth sphere disposed between the second carrier and the third carrier.

According to an embodiment, at least one of the first carrier or the third carrier may include at least one third guide portion for guiding the third sphere to move in the third direction on the first carrier. At least one of the first carrier or the third carrier may include at least one of the second carrier or the third carrier may include at least one fourth guide portion for guiding the fourth sphere to move in the second direction on the third carrier.

According to an embodiment, the second driving unit may include a second magnet (e.g., the second magnet 321 of FIG. 7) disposed on a first side of the second carrier, a third magnet (e.g., the third magnet 323 of FIG. 7) disposed on a second side of the second carrier, a second coil (e.g., the second coil 322 of FIG. 7) disposed to face the second magnet, and a third coil (e.g., the second coil 324 of FIG. 7) disposed to face the third magnet. The first side of the first carrier may face in an opposite direction to the second side of the second carrier.

According to an embodiment, the camera module may include a fourth carrier (e.g., the fourth carrier 140 of FIG. 1) for accommodating the optical refractive member. The fourth carrier may include an opening (e.g., the opening 141 of FIG. 2) disposed between the optical refractive member and the image sensor. The optical refractive member may be disposed to refract the path of the light such that the light passing through the optical refractive member enters the image sensor through the opening.

According to an embodiment, the first carrier may transport the image sensor in the first direction by a first distance based on the opening. The image sensor may be disposed apart from the opening by a second distance which is greater than the first distance to be spaced apart from the opening by a specific distance, if transported by the first carrier in the first direction by the first distance. The second distance may be equal to or greater than 0.4 mm.

According to an embodiment, the housing may include a base (e.g., the base 1031 of FIG. 14), and a side portion (e.g., the side portion 1032 of FIG. 14) extending from one end of the base and restricting a movement rage of the second driving unit in at least one of the second direction or the third direction. The camera module may include a cover (e.g., the cover 150 of FIG. 1) for covering at least a part of the housing and restricting a movement range of the first driving unit in the first direction.

According to an embodiment, the camera module may include at least one elastic member (e.g., the elastic member 212 of FIG. 5) disposed on a surface facing the cover in the first carrier.

According to an embodiment, the first carrier may have a first length (e.g., the first length R1 of FIG. 3 and/or the first length D1 of IG. 14) in the first direction. For example, the first carrier may include at least one first guide portion disposed on a first side of the first carrier. The at least one first guide portion may guide the at least one first sphere to move in the first direction. The optical refractive member may have a second length (e.g., the second length D2 of FIG. 14) in the first direction. The image sensor may have a third length (e.g., the third length D3 of FIG. 14) in the first direction. The optical refractive member may be spaced apart from the image sensor by a fourth length (e.g., the fourth length D4 of FIG. 14) in the first direction. The first length may be smaller than a sum of the second length, the third length and the fourth length.

According to an embodiment, the sum of the length of the at least one first sphere in the first direction may have a fifth length (e.g., the second length R2 or the third length R3 of FIG. 3). The first carrier may move in the first direction by a sixth length (e.g., the fourth length R4 of FIG. 3). A sum of the fifth length and the sixth length may be smaller than the first length (e.g., the first length R1 of FIG. 3 and/or the first length D1 of FIG. 14).

According to an embodiment, the first carrier may have a first width (e.g., the first length W1 of FIG. 15) in the third direction and a second width (e.g., the second width W2 of FIG. 15) in the second direction. For example, when the first carrier is viewed from the first direction, the first carrier may have the first width in the third direction and the second width in the second direction. The optical refractive member may have a third width (e.g., the third width W3 of FIG. 15) in the third direction and a fourth width (e.g., the third width W4 of FIG. 15) in the second direction. For example, when the optical refractive member is viewed from the first direction, the optical refractive member may have the third width in the third direction and the fourth width in the second direction. The first width may be smaller than the third width. The second width may be greater than the fourth width.

According to an embodiment, the first direction (e.g., the z-axis direction or the -z-axis direction of FIG. 1) may be a direction substantially parallel to an optical axis of the at least one lens. The second direction (e.g., the x-axis direction or the -x-axis direction of FIG. 1) may be a direction substantially perpendicular to the optical axis. The third direction (e.g., the y-axis direction or the -y-axis direction of FIG. 1) may be a direction substantially perpendicular to the optical axis and the second direction.

As described above, an electronic device (e.g., the electronic device 1200 of FIG. 16) according to an embodiment may include a camera module (e.g., the camera module 100 of FIG. 1), and at least one processor (e.g., the processor 1420 of FIG. 17) for controlling an operation of the camera module. The camera module may include a lens assembly including at least one lens, an optical refractive member, an image sensor for converting light received through the at least one lens and the optical refractive member into an electrical signal, a housing for accommodating the optical refractive member and the image sensor, a first driving unit for moving the image sensor in a first direction in which a distance between the optical refractive member and the image sensor is changed, and a second driving unit for moving the image sensor in at least one of a second direction or a third direction different from the second direction with respect to the housing. The first driving unit may include a first carrier for moving the image sensor in the first direction, and at least one first sphere disposed between the first carrier and the housing and allowing movement of the first carrier.

The technical problems to be achieved by the disclosure are not limited to the technical problems mentioned above, and other technical problems not mentioned may be clearly understood by those skilled in the art of the technical field which the disclosure belongs to.

Effects obtainable from the disclosure are not limited to the above-mentioned effects, and other effects which are not mentioned may be clearly understood by those skilled in the art of the technical field which the disclosure belongs to.

## Claims

1. A camera module comprising:
a lens assembly comprising at least one lens;
an optical refractive member disposed to a path of light passing through at least a part of the at least one lens;
an image sensor for converting the light received through the at least one lens and the optical refractive member into an electrical signal;
a housing for accommodating the optical refractive member and the image sensor;
a first driving unit for moving the image sensor within an internal space formed by the housing in a first direction in which a distance between the optical refractive member and the image sensor is changed; and
a second driving unit for moving the image sensor in at least one of a second direction or a third direction which is different from the second direction based on the housing,
wherein the first driving unit comprises,
a first carrier for transporting at least a part of the second driving unit which accommodates the image sensor in the first direction, and at least one first sphere interposed between the first carrier and the housing and disposed to move the first carrier in the first direction with respect to the housing.

2. The camera module of claim 1, wherein the first driving unit comprises,
a first magnet disposed on a first side of the first carrier; and
a first coil disposed to face the first magnet.

3. The camera module of claim 2, wherein the first carrier comprises at least one first guide portion disposed on the first side of the first carrier and guiding the at least one first sphere to move in the first direction.

4. The camera module of claim 3, wherein the first driving unit comprises at least one second sphere disposed between the housing and the first carrier, and allowing movement of the first carrier, and
the first carrier comprises at least one second guide portion for guiding the at least one second sphere to move in the first direction on the first side of the first carrier, and the first carrier comprises at least one elastic member formed between the first guide portion and the second guide portion to have lower rigidity than other portions of the first side of the first carrier.

5. The camera module of claim 3, wherein the first driving unit comprises at least one second sphere disposed between the housing and the first carrier, and allowing movement of the first carrier,
the first carrier comprises at least one second guide portion for guiding the at least one second sphere to move in the first direction on the first side of the first carrier, and
the first magnet is disposed between the at least one first guide portion and the at least one second guide portion.

6. The camera module of claim 5, further comprising:
a first yoke disposed to face the first magnet, and a second yoke facing the first magnet and disposed between the first yoke and the at least one first sphere,
wherein the second yoke is disposed at a position biased toward the at least one first sphere relative to the at least one second sphere.

7. The camera module of claim 5, wherein a size of the at least one first sphere has a first size, and
a size of the at least one second sphere has a second size smaller than the first size.

8. The camera module of claim 1, wherein the second driving unit comprises a second carrier coupled with the image sensor and transporting the image sensor in at least one of the second direction or the third direction, and at least one third sphere disposed between the first carrier and the second carrier to allow the second carrier to move on the first carrier.

9. The camera module of claim 8, wherein the second carrier transports the image sensor in the second direction,
the second driving unit further comprises,
a third carrier for transporting the second carrier coupled with the image sensor in the third direction and at least one fourth sphere disposed between the second carrier and the third carrier,
at least one of the first carrier or the third carrier comprises at least one third guide portion for guiding the third sphere to move in the third direction on the first carrier, and
at least one of the second carrier or the third carrier comprises at least one fourth guide portion for guiding the fourth sphere to move in the second direction on the third carrier.

10. The camera module of claim 8, wherein the second driving unit comprises,
a second magnet disposed on a first side of the second carrier;
a third magnet disposed on a second side of the second carrier;
a second coil disposed to face the second magnet; and
a third coil disposed to face the third magnet,
wherein the first side of the first carrier faces in an opposite direction to the second side of the second carrier.

11. The camera module of claim 1, further comprising:
a fourth carrier for accommodating the optical refractive member,
wherein the fourth carrier comprises an opening disposed between the optical refractive member and the image sensor, and
the optical refractive member is disposed to refract the path of the light such that the light passing through the optical refractive member enters the image sensor through the opening.

12. The camera module of claim 11, wherein the first carrier transports the image sensor in the first direction by a first distance based on the opening,
the image sensor is disposed apart from the opening by a second distance which is greater than the first distance to be spaced apart from the opening by a specific distance, if transported by the first carrier in the first direction by the first distance, and
the second distance is equal to or greater than 0.4 mm.

13. The camera module of claim 1, wherein the first carrier comprises at least one first guide portion disposed on a first side of the first carrier and guiding the at least one first sphere to move in the first direction,
a second side of the first carrier, which faces in the opposite direction to the first side of the first carrier, has a first length in the first direction,
the optical refractive member has a second length in the first direction,
the image sensor has a third length in the first direction,
the optical refractive member is spaced apart from the image sensor by a fourth length in the first direction, and
the first length is smaller than a sum of the second length, the third length and the fourth length.

14. The camera module of claim 13, wherein the sum of the length of the at least one first sphere in the first direction has a fifth length,
the first carrier is movable in the first direction by a sixth length, and
a sum of the fifth length and the sixth length is smaller than the first length.

15. The camera module of claim 1, wherein the first carrier has a first width in the third direction and a second width in the second direction when the first carrier is viewed from the first direction,
the optical refractive member has a third width in the third direction and a fourth width in the second direction when the optical refractive member is viewed from the first direction,
the first width is smaller than the third width, and
the second width is greater than the fourth width.
